(19) Europäisches Patentamt
European Patent Office
Office européen des brevets

(11) EP 0 643 736 B1

# (12) EUROPEAN PATENT SPECIFICATION

(45) Date of publication and mention of the grant of the patent:
**26.11.1997 Bulletin 1997/48**

(21) Application number: **93916423.2**

(22) Date of filing: **02.06.1993**

(51) Int Cl.6: **C08G 73/02**, H01B 1/12

(86) International application number:
**PCT/US93/05295**

(87) International publication number:
**WO 93/24554 (09.12.1993 Gazette 1993/29)**

(54) **Thermally stable electrically conductive conjugated polymer complexes having hydrogen bonding counterions**

Wärmestabile und elektrisch leitende Komplexe von konjugierten Polymeren mit Wasserstoffbrückenbindungen ausbildenden Gegenionen

Complexes de polyaniline à conductivité électrique et stables à la chaleur possedant des contre-ions formant des liaisons hydrogènes

(84) Designated Contracting States:
**DE DK FR GB IT NL SE**

(30) Priority: **03.06.1992 US 892859**
**28.09.1992 US 952371**

(43) Date of publication of application:
**22.03.1995 Bulletin 1995/12**

(73) Proprietor: **AlliedSignal Inc.**
**Morristown, New Jersey 07962-2245 (US)**

(72) Inventors:
- **SHACKLETTE, Lawrence, W.**
**Maplewood, NJ 07040 (US)**
- **HAN, Chien-Chung**
**Madison, NJ 07940 (US)**
- **ELSENBAUMER, Ronald, L.**
**Arlington, TX 76019-0023 (US)**

(74) Representative: **Brock, Peter William**
**Urquhart-Dykes & Lord**
**1 Richfield Place**
**Richfield Avenue**
**Reading RG1 8EQ Berkshire (GB)**

(56) References cited:
**WO-A-90/10297**
**WO-A-92/11645**
**WO-A-93/05519**
**US-A- 4 983 322**
**US-A- 5 079 334**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 643 736 B1

## Description

This invention relates to a method for preparing thermally stable, electrically conductive substituted and unsubstituted doped conjugated polymer compositions which are cation complexes having a relatively high electrical conductivity and preferably having relatively high thermal stability. The compositions comprising such conjugated polymers can be combined with other materials as for example fillers and polymers. Polymer articles, including films, inks, fibers, and coatings can be formed from the polymer compositions of this invention.

There has recently been an increased interest in the electrochemistry and electrical phenomena of polymeric systems. Recently, work has intensified with polymers having extended conjugation in at least one backbone chain. One conjugated polymer system with strong hydrogen bonding and polar interactions currently under study is polyaniline. See for example EP-A-0017717 and US-A-3963498, -4025463, -4855361, -4798685, -4806271, -4851487, -4940640, -4798685, -5006278 and -5069820; and WO89/01694 and WO90/102797. Another conjugated polymer system which is capable of strong hydrogen bonding and/or polar interactions is polypyrrole, see for example EP-A-055358.

The present invention provides a method for preparing an electrically conductive substituted or unsubstituted conjugated homopolymer or copolymer cation complex by contacting substituted or unsubstituted positively charged conjugated homopolymer or copolymer cations with negatively charged dopant anions. According to the invention, said dopant anions have at least one anionic functionality and at least one hydrogen bonding group.

According to a preferred embodiment, the anionic functionality and the hydrogen bonding group are located in the dopant molecule such that they cannot bond to one another.

One aspect of the present invention relates to the preparation of an electrically conductive, doped, substituted or unsubstituted conjugated polymer comprised of an ionized conjugated polymer (polymeric cation) having one or more "hydrogen bonding groups" and one or more dopant solutes (anions) selected from the group consisting of organic species having at least one anionic group as for example a phosphonate or sulfonate acid functional group, and having one or more "hydrogen bonding groups", said hydrogen bonding groups of said dopant solute being capable of bonding with said hydrogen bonding groups of the conjugated polymer. Another aspect of this invention is articles formed from this conjugated polymer. Compositions obtained according to this invention may be dispersed in a matrix of one or more non-electrically conductive thermoplastic polymers and/or thermosetting resins. Alternatively one or more doped conjugated polymers obtained according to this invention may be blended with one or more thermoplastic resins and/or thermosetting polymers.

As used herein a "conjugated polymer(s)" are homopolymers or copolymers which are comprised of alternating carbon-carbon double bonds (either singly or as part of an aromatic ring structure), and optionally including one or more heteroatoms such as oxygen, nitrogen, sulfur, selenium, phosphorus and the like along the polymer conjugated backbone or conjugated side chains thereof which can be rendered to an electrically conductive state (equal to or greater than $10^{-8}$S/cm as determined by the four-in-line probe method described in "Laboratory Notes on Electrical and Galvanometric Measurements" by H.H. Wieder, Elsevier Scientific Publishing Co., New York, New York, 1979) by doping with some dopants known in the art).

As used herein, an "organic radical" means a polymeric, monomeric or oligomeric organic radical; "electrically conductive" means that the doped conjugated polymer has a conductivity of at least about $10^{-8}$S/cm (preferably equal to or greater than about $10^{-6}$S/cm, more preferably equal to or greater than about $10^{-3}$S/cm and most preferably equal to or greater than about 1 S/cm) as determined by the four-in-line probe method described in "Laboratory Notes on Electrical and Galvanometric Measurements" by H.H. Wieder, Elsevier Scientific Publishing Co., New York, 1979; "thermally stable" means an electrically conductive polymer having a half life for electrical conductivity equal to or greater than one hour in air at a temperature of 150°C; "acid function" is a acid function having at least one proton or at least one function that can be thermally or chemically trane-formed into a proton under use conditions, such as $NH_4$+, $PH_3S^+$, $N(CH_3)_2H_2^+$, $N(C_2H_5)H_3$+ such as a carboxylic acid, boric acid, sulfonic acid, sulfonic acid, phosphoric acid, phosphinic acid; and "sulfur or phosphorus acid function" means acid groups containing a sulfur and/or phosphorus atom such as sulfonic acid, sulfonic acid, phosphoric acid, phosphinic acid, phosphonic acid.

As used herein "hydrogen bonding substituent" mean an organic or inorganic radical having one or more functional groups which are capable of interacting with any organic or inorganic radical to form one or more hydrogen bonding interactions, as for example hydrogen bonding functional groups such as -O-, -N-, -S-, -P-, $-CO_2-$, halo, -C(O)-, -C(O)O-, N(H)C(O)-, -N(H)C(O)N(H)-, -OH, -OR, -NH-, -NR-, $-NH_2$, -N(H)(R), -N(R)(R), $-SO_3-$, $-PO_2=$, $-PHO_2-$, $-PO_3=$, -SH, and -SR, where R is an organic radical which may be substituted with acid functional groups, such as a sulfonic acid, sulfonic acid, phosphonic acid, phosphinic acid, phosphoric acid, carboxylic acid, boric acid group, and the derivatives thereof, such as salts and esters.

Several advantages flow from this invention. For example, the compositions obtained according to this invention exhibit relatively enhanced thermal stability. In those embodiments of the invention where the conjugated polymer is capable of strong hydrogen bonding or polar interactions the composition obtained according to this invention exhibits

enhanced conductivity, and, in addition, exhibits enhanced thermal stability.

Conjugated polymers for use in the process of this invention may vary widely provided that the polymer includes one or more hydrogen bonding groups. The hydrogen bonding group can be at any position in the polymer as for example in a backbone chain, in a chain pendant to the main backbone or substituted to said backbone chain or said pendant chain, but is preferably in the main backbone. Illustrative of such polymers are poly(unsaturated) polymers such as substituted and unsubstituted polyacetylene; substituted or unsubstituted poly(heteroaromatics), such as poly (thienylenes), poly(pyrroles), poly(quinolines), poly(isothianaphthenes), poly(carbazoles), poly(alkyl thiophenes); substituted or unsubstituted poly(aromatics) such as poly(phenylene sulfides), poly(anilines), polyacenes, poly(phenylenes), poly(naphthalenes), poly(naphthols), and poly(perinaphthalenes); poly(benzoquinones); poly(azulenes); and substituted or unsubstituted poly(aromatic vinylenes) such as poly(phenylene vinylenes), poly(dimethoxyphenylene vinylenes), poly(naphthalene vinylenes); and substituted or unsubstituted poly(heteroaromatic vinylenes) such as poly (thienylene vinylenes), poly(furylene vinylenes), poly(carbazole vinylenes), poly(pyrrole vinylenes) or derivatives thereof which include one or more hydrogen bonding groups.

Where the polymer does not include hydrogen bonding group in the backbone chains or in a pendant chain, as for example, polyphenylene, poly(naphthalene), poly(perinephthalene) then only derivatives which are substituted by a hydrogen bonding group such as hydroxyl are suitable. Other polymers such as polypyrroles and polyanilines which include hydrogen bonding group in the polymer backbone need not be derivatized.

Preferred conjugated homopolymers or copolymers are "conjugated backbone homopolymers or copolymers". As used herein, "conjugated backbone homopolymers or copolymers" are conjugated homopolymers or copolymers in which all or substantially all of the conjugation is in the main backbone of the homopolymer or copolymer.

Preferred conjugated homopolymer or copolymers are substituted or unsubstituted polyanilines, poly(heterocycles), and aromatic of heteroaromatic vinylenes. Illustrative of preferred homopolymers or copolymers of poly(heterocycles), and aromatic or heteroamatic vinylenes are those described in more detail in U.S. Patent Nos. 4,711,742 and 5,068,060 and PCT/WO88/00954. More preferred for the practice of this invention are conjugated polymers which have relatively low acidity (pKa>2, preferably > 4 and most preferably > 6) and which are readily doped by protonic acids as for example, polyaniline, poly(benzoquinone), polypyrrole, and poly(azobenzene).

More preferred conjugated backbone homopolymers or copolymers are poly(anilines) and polypyrroles. Most preferred polymers are polyanilines. As used herein, "poly(anilines)" are homopolymers or copolymers in which the recurring backbone monomeric units are selected from the group consisting of substituted or unsubstituted phenyl rings and amine linkages (-NH- or -NR- where R is a substituent other than hydrogen) which may contain varying amounts of substituted or unsubstituted quinoid rings and imine (-N=) linkages. As used herein, "neutral or undoped polyaniline" is characterized by an uncharged backbone, "polyaniline base" is a particular form of undoped polyaniline which contains at least one quinoid diimine linkage in the backbone and "electrically conductive or doped poly(aniline)" is characterized by a charged backbone which may be formed by a partial or complete protonation of the amine and/or imine nitrogen atoms. As used herein, "leuco-polyaniline" is a neutral form of polyaniline which is in a reduced form (low oxidation state) and which comprises to a substantial degree aromatic phenyl rings linked by amine (-NH-) linkages. Such leuco-polyanilines are preferably doped with oxidizing dopants (such as ferric salts).

Any form of such poly(anilines) can be conveniently used in the practice of this invention. Illustrative of useful forms are those described in Green, A.G. and Woodhead, A.E., CXVII-Aniline-black and Allied Compounds, Part II", J. Chem. Soc., 101 pp. 1117 (1912) and Kobayashi, et al., "Electrochemical Reactions... of Polyaniline Film-Coated Electrodes", J. Electroanal. Chem., 177, pp. 281-91 (1984) and in Shacklette, L.W., et al. "Structure and Properties of Polyaniline as Modeled by Single-Crystal Oligomers", J. Chem. PhYs. 88 P 3955 (1988), which are hereby incorporated by references.

In the preferred embodiments of the invention, poly(anilines) for use in the invention are homopolymers and copolymers of the type derived from the polymerization of unsubstituted and substituted anilines of the Formula I:

**FORMULA I**

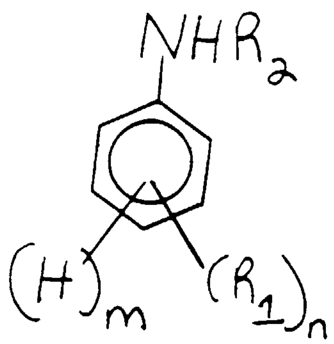

wherein:

n is an integer from 0 to 5;

m is an integer from 0 to 5, with the proviso that the sum of n and m is equal to 5 and with the further proviso that at least one position on the aniline ring, preferably at the para position, is substituted with a substituent which will allow coupling of the aniline units, such as halo, hydrogen or other leaving group;

$R_1$ is the same or different at each occurrence and is selected from the group consisting of alkyl, deuterium, alkenyl, alkoxy, cycloalkyl, cycloalkenyl, alkanoyl, alkylthio, aryloxy, alkylthioalkyl, alkylaryl, arylalkyl, amino, alkylamino, dialkylamino, arylamino, diarylamino, alkylarylamino, aryl, alkylsulfinyl, aryloxyalkyl, alkylsulfinylalkyl, alkoxyalkyl, alkylsulfonyl, arylthio, alkylsulfonylalkyl, boric acid or salts or esters thereof, phosphoric acid or salts or esters thereof, sulfinate salts, arylsulfinyl, alkoxycarbonyl, arylsulfonyl, carboxylic acid or salts or esters thereof, phosphonic acid or salts or esters thereof, halo, hydroxy, cyano, sulfonic acid or salts or esters thereof, phosphinic acid or salts or esters thereof, nitro, alkylsilane, or any of the foregoing aryl, aliphatic or cycloaliphatic groups substituted with one or more phosphonic acid or salts or esters thereof, sulfonic acid or salts or esters thereof, phosphoric acid or salts or esters thereof, boric acid or salts or esters thereof, phosphinic acid or salts or esters thereof, carboxylic acid or salts or esters thereof, halo, nitro, amino, alkylamino, dialkylamino, arylamino, diarylamino, alkylarylamino, cyano or epoxy moieties; or any two $R_1$ groups together or any $R_1$ group together with any $R_2$ group may form a substituted or unsubstituted alkylene, alkenylene or alkynylene chain completing a 3, 4, 5, 6, 7, 8, 9 or 10 membered aromatic, heteroaromatic, heteroalicyclic or alicyclic ring, which ring may optionally include one or more divalent nitrogen, sulfur, sulfinyl, or salts or esters thereof, carbonyl, sulfonyl, or oxygen atoms wherein permissible substituents are one or more phosphonic acid or salts or esters thereof, sulfonic acid or salts or esters thereof, phosphoric acid or salts or esters thereof, boric acid or salts or esters thereof, phosphinic acid or salts or esters thereof, carboxylic acid or salts or esters thereof, halo, nitro, amino, alkylamino, dialkylamino, arylamino, diarylamino, alkylarylamino, cyano or epoxy moieties ; or $R_1$ is an aliphatic moiety having repeat units of the formula:

$$-(OCH_2CH_2)_qO-CH_3,\ -(OCH_2CH(CH_3))_qO-CH_3,$$

$$-(CH_2)_qCF_3,\ -(CF_2)_q-CF_3 \text{ or } -(CH_2)_qCH_3$$

wherein q is a positive whole number; and

$R_2$ is selected from the group consisting of permissible $R_1$ substituents and hydrogen.

Illustrative of useful $R_1$ groups are hydrogen, alkyl, such as methyl, ethyl, octyl, nonyl, tert-butyl, neopentyl, isopropyl, sec-butyl, dodecyl, alkenyl such as 1-propenyl, 1-utenyl, 1-pentenyl, 1-hexenyl, 1-heptenyl, 1-octenyl; alkoxy such as propoxy, butoxy, methoxy, isopropoxy, pentoxy, nonoxy, ethyoxy, octoxy; cycloalkenyl such as cyclohexenyl, cyclopentenyl; alkanoyl such as butanoyl, pentanoyl, octanoyl, ethanoyl, propanoyl; amino; alkylamino, such as methylamino, ethylamino, butylamino; dialkylamino, such as dimethylamino, methylethylamino; arylamino such as phenylamino, p-methylphenylamino; diarylamino, such as diphenylamino, p-nitrophenyl-p'-methylphenylamino ; alkylarylamino, such as 2-phenyl-4-methylamino; alkylsulfinyl, alkylsulfonyl, alkylthio, arylthio, arylsulfinyl, and arylsulfonyl

such as butylthio, neopentylthio, methylsulfinyl, benzylsulfinyl, phenylsulfinyl, propylthio, octylthio, nonylsulfonyl, octylsulfonyl, methylthio, isopropylthio, phenylsulfonyl, methylsulfonyl, nonylthio, phenylthio, ethylthio, benzylthio, phenethylthio, sec-butylthio, naphthylthio; alkoxycarbonyl such as methoxycarbonyl, ethoxycarbonyl, butoxycarbonyl; cycloalkyl such as cyclohexyl, cyclopentyl, cyclo-octyl, cycloheptyl; alkoxyalkyl such as methoxy-methyl, ethoxymethyl, butoxymethyl, propoxyethyl, pentoxybutyl; aryloxyalkyl and aryloxyaryl such as phenoxyphenyl, phenoxymethyl; and various substituted alkyl and aryl groups such as 1-hydroxybutyl, 1-aminobutyl, 1-hydroxypropyl, 1-hydroxypentyl, 1-hydroxyoctyl, 1-hydroxyethyl, 2-nitroethyl, trifluoromethyl, 3,4-epoxybutyl, cyanomethyl, 3-chloropropyl, 4-nitrophenyl, 3-cyanophenyl; acid and acid salts such as sulfonic acid, carboxylic acid and salts thereof; aliphatic or aryl groups substituted with an acid or salt thereof such as phosphonic acid, phosphinic acid, sulfonate salt, sulfinate salt, sulfonic acid, sulfonic acid, borate salt, phosphoric acid, boric acid, or carboxylic acid groups such as ethylsulfonic acid, propylsulfonic acid, 4-nitrobenzene sulfonic acid, butylsulfonic acid, phenylsulfonic acid.

Also illustrative of useful $R_1$ groups are divalent moieties derived from any two $R_1$ groups or a $R_1$ group with a $R_2$ group such as moieties having from about 2 to about 7 repeat units of the formula:

$$-(CR_3=CR_3)_b-$$

$$-(C(R_3)_2)_a-$$

wherein $R_3$ is the same or different at each occurrence and is hydrogen or alkyl, as for example $-(CH_2)_4-$, $-(CH_2)_3-$, $-(CH=CH-CH=CH)-$, $-[CH_2-CH(CH_3)-CH_2]-$ and $-(CH_2)_5-$, and groups comprised of such moieties which include one or more heteroatoms of oxygen, nitrogen, ester, sulfonyl, carbonyl, sulfinyl, and/or sulfur, such as $-CH_2SCH_2-$ $-CH_2NHCH_2-$, $-SCH_2NHCH_2-$, $-O-CH_2.CH_2O-$ $-O-CH_2-S-CH_2-$, $-CH_2S(O_2)CH_2-$, $-CH_2S(O)CH_2-$, -OC(O)CH2CH2-, $-CH_2C(O)CH_2-$ and $-CH_2-O-CH_2-$ to form heterocyclic amino compounds such as tetrahydronaphthylamine, dihydrobenzopyrroleamine, benzofuranamine, dihydrobenzopyranamine, dihydrobenzofuranamine, dihydrobenzoparaoxazineamine, dihydrobenzoparadiazineamine, dihydrobenzotriazoleamine, dihydrobenzothiazineamine,benzothiopyranamine, dihydrobenzoxazoleamine. Exemplary of useful $R_3$ groups are divalent alkenylene chains containing 1 to about 3 unsaturated bonds such as divalent 1,3-butadiene and like moieties which may also include one or more divalent oxygen, nitrogen, sulfinyl, sulfonyl, carbonyl, ester, and/or sulfur groups which form such compounds as benzodiazineamine, benzodiazoleamine, benzotriazepine-amine, benzimidazolylamine, benzisoxazoleamine, benzoxazolylamine, benzothiazineamine, benzoxazineamine, naphthaleneamine, benzopyranamine, benzothiazineamine, anthraceneamine, aminobenzothio-pyran,aminobenzodiazine, benzthiopyrone amine, amino-coumarin, benzthiopheneamine, benzothiodiazoleamine.

Exemplary of useful $R_2$ groups are hydrogen and the above-referenced representative $R_1$ groups described above such as alkyl as for example, methyl, ethyl, isopropyl, butyl, isobutyl, hexyl, octyl ; alkylsulfonyl such as methylsulfonyl, ethylsufonyl, propylsulfonyl ; arylsulfonyl such as phenylsulfonyl, p-methyl phenylsulfonyl, naphthylsulfonyl.

Preferred polyaniline consists of repeat units of the Formulas II and/or III:

Formula II

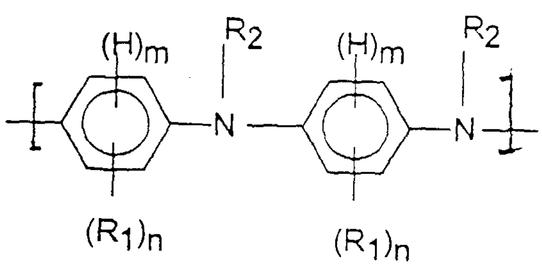

**Formula III**

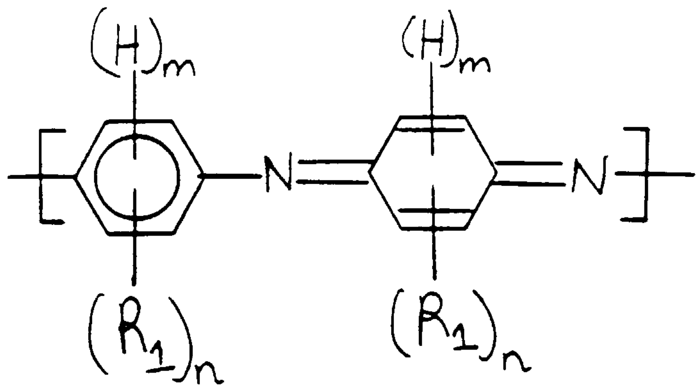

a combination thereof having various ratios of the above repeat units in the polyaniline backbone such as leucoemeraldine, protoemeraldine, emeraldine, nigraniline and pernigraniline. Poly(anilines) useful in the practice of this invention are more preferably those of the Formula IV:

**FORMULA IV**

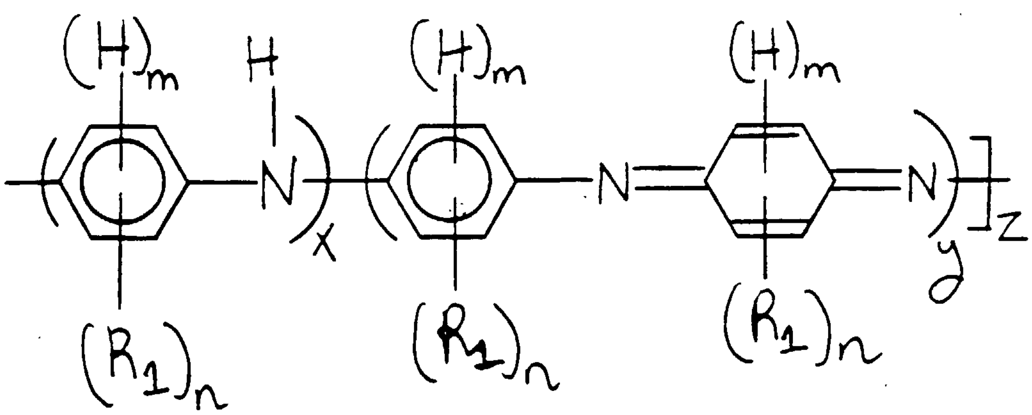

wherein:

n, m, $R_1$ and $R_2$ are as described above;
x and y are the same or different at each occurrence and are integers equal to or greater than 0, with the proviso than the sum of x and y is greater than 0, preferably where x is an integer equal to or greater than 0 and/or that the ratio of x to y is greater than or equal to about 0, more preferably said ratio is equal to or greater than 0.5 and most preferably said ratio is equal to or greater than about 1; and
z is the same or different at each occurrence and is an integer equal to or greater than about 5.

Preferred for use in the practice of this invention are poly(anilines) of the above Formula IV in which:

n is an integer from 0 or 1;
m is an integer from 3 or 4, with the proviso that the sum of n and m is equal to 4;
$R_1$ is phenyl, or alkyl or alkoxy having from 1 to about 12 carbon atoms, a protonic acid function or a salt or ester thereof, or alkyl, phenyl or alkoxy substituted with one more or protonic acids or salts or esters thereof;
x is an integer equal to or greater than 1;
y is equal to or greater than 0,

with the proviso that the ratio of x to y is equal to or greater than 0.5;

z is an integer equal to or greater than about 5;

Particularly preferred for use in the practice of this invention are poly(anilines) of the above Formula IV in which:

n is an integer from 0 or 1;
m is an integer from 3 or 4 with the proviso that the sum of n and m is equal to 4;.
$R_1$ is alkyl or alkoxy having from 1 to about 6 carbon carboxylic acid or salts or esters thereof, phosphinic acid or salts or esters thereof, sulfonic acid or salts or esters thereof, sulfonic acid or salts or esters thereof, phosphonic acid or salts or esters thereof, or alkyl or alkoxy substituted with phosphinic acid or salts or esters thereof, sulfonic acid or salts or esters thereof, halo phosphonic acid or salts or esters thereof, or sulfonic acid or salts or esters thereof;
x is an integer equal to or greater than 2;
y is equal to or greater than 0, with the proviso that the ratio of x to y is greater than about 1; and
z is an integer equal to or greater than about 10.

Amongst the preferred embodiments, more preferred for use in the practice of this invention are poly(anilines) of the above Formula IV in which:

n is an integer from 0 or 1;
m is an integer from 3 or 4, with the proviso that the sum of n and m is equal to 4;
$R_1$ is alkoxy or alkyl of from 1 to about 3 carbon atoms, sulfonic acid or salts thereof, phosphoric acid or salts thereof, or phosphonic acid or salts thereof;
x is an integer equal to or greater than 2; and
y is an integer equal to or greater than 1, with the proviso that the ratio of x to y is equal to or greater than about 2; and
z is an integer equal to or greater than about 10.

In the most preferred embodiment of the invention

n is 0;
m is 4;
x is an integer equal to about 2;
y is an integer equal to about 1 with the proviso that the ratio of x to y is equal to or greater than about 2;and
z is an integer equal to or greater than about 10.

In general, the number of aniline repeat units is not critical and may vary widely. The greater the number of aniline repeat units the greater the viscosity and molecular weight of the polyaniline. In those applications where a polyaniline of lower molecular weight and viscosity is required, such material may be used, and in those applications where a polyaniline of high molecular weight and viscosity is required, then such material can be used. The number of aniline repeat units is preferably at least about 10. The upper limit can vary widely depending on the desired viscosity and molecular weight. In the more preferred embodiments of the invention, the number of aniline repeat units is at least about 20, and in the particularly preferred embodiments, the number of repeat units is at least about 30. Amongst the particularly preferred embodiments, most preferred are those embodiments in which the number of repeat units is at least about 40.

Conjugated homopolymers and copolymers can be conveniently prepared through conventional procedures. Such procedures are well known in the art and will not be described herein in great detail. See for example U.S. Patent Nos. 4,940,640; 4,711,742; 4,521,589; 4,808,681; 4,983,322; 5,006,278 and 4,900,782; PCT W088/00954; and "The Handbook of Conducting Polymers", edited by Terje A. Skotheim, Marcell Decker, Inc., New York and Basel and references cited therein, all of which is hereby incorporated by reference. For example, preferred polyanilines can be prepared through use of chemical and electrochemical synthetic procedures. For example, one form of polyaniline can be prepared chemically by treating a suitable aniline with an oxidant such as ammonium persulfate $(NH_4)_2S_2O_8$ in excess acid such as 1M HCl. This powdered form of polyaniline is blue green in color. After methanol washing and air drying this material exhibits a conductivity of about 5 S/cm. This conductive form of polyaniline can be treated with ammonium hydroxide in ethanol to form a non-conductive form of polyaniline which is dark blue in color and which has a conductivity of less than 10-8 S/cm. Other chemical procedures for preparation of various chemical forms of polyaniline are described in detail in Green et al and U.S. Patent Nos. 4,855,361, 4,798,685, 4,806,271, 4,822,638, 4,851,487 and 4,940,517 described above.

Useful forms of conjugated polymers can also be prepared electrochemically. For example, useful forms of polyaniline can be prepared by the electrochemical oxidation of aniline in aqueous fluoroboric acid electrolyte on a platinum foil anode.

Other useful conjugated polymers can be prepared pyrolytically. For example, polyacenes can be prepared by the pyrrolysis of phenolic resins as described in greater detail in U.S.Patent Nos. 4,615,960; 4,628,015; 4,601,849; and 4,753,717.

Other chemical and electrochemical syntheses and transformations of the conductive form of polyaniline may be discovered and are presently contemplated as being useful. Moreover, additional forms or types of polyaniline may be elucidated in the future. Accordingly, no limitation to the syntheses, transformation, or structures herein described or postulated is intended beyond the limitations of the appended claims.

The Conjugated polymer is rendered electrically conductive by doping with a dopant solute. In general, such dopant solute is derived from a dopant compound, which upon addition to the conjugated polymer, introduces positive charge carriers onto the polymer backbone with co-committent formation of an anionic dopant solute species (dopant anion) to form a charge transfer complex with the conjugated polymer, which complex has a conductivity equal to or greater than about $10^{-8}ohm^{-1}cm^{-1}$ by the four-in-line probe method.

Dopants for use in the practice of this invention are critical and must include one or more hydrogen bonding groups. The particular dopant of choice will depend on the particular form of the undoped conjugated polymer. For example, if the polymer is initially in a reduced state (e.g. reduced polypyrrole or leuco-polyaniline) then the dopant of choice would be an oxidizing dopant or combination of dopants which includes at least one oxidizing dopant. Alternatively, if the polymer were a base, as for example polyaniline base, then the preferred dopant would be an acid.

The dopant or dopant combination must also be chosen such that the resulting conductive polymer complex contains a polymer cation and a dopant solute (anion) where the solute is an organic species having at least one anionic functionality (preferably a sulfur and/or phosphorus containing functionality) and at least one hydrogen bonding group in order to provide the enhanced thermal stability of this invention. While we do not wish to be bound by any theory, it is believed that such selected dopant solutes allow for hydrogen bonding interactions between the hydrogen bonding groups of the conjugated polymer and the hydrogen bonding group of the dopant anion which strengthens the bonding between the dopant anion and the polymer cation over and above that provided by the primary ionic interaction between the polymer cation and the dopant anion. For example, in the case of polyaniline, it is believed that the hydrogen bonding interactions would be between the amine and/or imine linkages in the polyaniline backbone and the hydrogen bonding group of the dopant solute. Such increased bond strength leads to increased thermal stability. Although not critical, it is believed that these interactions are maximized when the distance between at least one anionic functionality and the hydrogen bonding group of the dopant anion are such that the anionic functionality and the hydrogen bonding group are capable of coordinating with adjacent hydrogen groups bonding along the backbone of a single chain of the conjugated polymer, as for example the amine and/or imine linkages in the case of polyaniline. In the preferred embodiments of the invention, when the conjugated polymer is an unsubstituted polyaniline, the preferred distance between at least one anionic functionality and at least one hydrogen bonding group is approximately 0.5-0.6 nm (5 to 6 Å).

Likewise dopants containing multiple anionic functionalities such as sulfonic acid groups, phosphonic acid groups, boric acid groups, carboxylic acid groups, phosphoric acid groups, boronic acid groups, and the like, are preferred over dopants which contain only a single anionic functionalities, since in this case the strength of ionic bonding between the resulting dopant anion and the polymer cation is increased because such additional anionic functionalities and hydrogen bonding groups provide additional hydrogen bonding as well. Moreover, with additional bonding provided by multiple hydrogen bonding groups and/or anionic functionalities, bonding to and between multiple chains can also take place. It is believed that such bonding leads to a more rigid three-dimensional bonded structure which will act to limit the loss of dopant by diffusion and volatilization at relatively high temperature. For example, the periodicity of the charge density wave, which forms at the highest doping levels for polyaniline, corresponds to the distance between every second nitrogen linkage along the polyaniline backbone. In the preferred embodiments where the polyaniline is an unsubstituted polyaniline, the preferred distance between multiple acid groups is from 0.9-1.1 nm (9 to 11 Å).

Useful hydrogen bonding substituents may vary widely and essentially any hydrogen bonding group may be useful. Illustrative of useful groups are those described in A.F.M. Barton, "Handbook of Solubility Parameters", CRC Press, Bica Raton, FL. pp. 85-86 and Pimentel and McClellan, "The Hydrogen Bond", W.H. Freeman Company, San Francisco (1960). Useful groups usually are those containing an oxygen, nitrogen, phosphorus, sulfur and halogen. The oxygen may be singly or doubly bonded, and the nitrogen singly, doubly or triply bonded. Still other useful groups are weakly hydrogen bonding groups, carbon double and triple bonds and aromatic rings.

Illustrative of other useful hydrogen bonding functions are fluoro, cyano, hydroxy, carboxyl, chloro, bromo, iodo, sulfoxide, sulfone, sulfonamide, amino, imino, nitro, phenyl, carbonyl containing groups such as an aldehydes, amides, esters, urethanes, ketones and the like, alkoxy such as methoxy and ethoxy, aromatic sulfones, oxides and sulfoxides as for example phenyl oxide, diphenyl oxide, phenyl sulfoxide and phenylsulfone, and haloalkyl such as trifluoromethyl, organic or inorganic acids and their esters such as carboxylic acid and boric acid. Preferred hydrogen bonding substituents are oxygen containing groups such as hydrogen, hydroxy, carboxylic acid, ethers, and carbonyl, and halo, and the more preferred hydrogen bonding substituent is hydroxy.

Hydrogen bonding groups can also be classified according to their propensity to act as hydrogen acceptors or

donors. Examples of hydrogen acceptors include functional groups containing oxygen, as for example a carbonyl, carboxylate or ether functionality, halo, functional groups containing nitrogen such as divalent amine (-NH-) or imino nitrogen (-N=), sulfonate, phosphonate, sulfinate and the like. Examples of donors include amines such as $-NH_2$, -NHR (where R is an organic radical), or other hydrogen containing groups such as mercapto, hydroxy and sulfonamide. These groups also readily play a dual role and can function as either donor or acceptor depending on the environment.

Since the advantages of this invention derive from additional bonding between the dopant anion and the conjugated polymer cation, the placement of substituent groups in a manner which could allow bonding to each other is preferably avoided. For example, 4-hydroxybenzene sulfonic acid would be preferred over 2-hydroxybenzene sulfonic acid, since in the latter case, internal bonding between hydroxy and sulfonate groups can readily occur. Such bonding would tend to decrease the desired interaction with the conjugated polymer. Likewise, even though multiple acid groups and hydrogen bonding groups on the same anion would be generally expected to be beneficial, such benefit can be lost if donor and acceptor groups are substituted such that they interact or bond to themselves rather than too the conjugated polymer. For example, benefit can be derived from the addition of a hydroxy group to naphthalene disulfonic acid as for example with 1-hydroxynaphthalene 3,6-disulfonic acid. On the other hand such benefit is decreased with 3,6-dihydroxynaphthalene 2,7-disulfonic acid because of the juxtaposition of hydrogen bonding donor and acceptor groups. Thus, in the preferred embodiments of this invention hydrogen bonding groups and acid functions are not substituted at adjacent positions.

In dopant anions for use in the preferred embodiments of the invention, one or more anionic functionalities and the one or more hydrogen bonding groups are bonded to an organic substrate (radical) such as an aliphatic radical as for example, alkoxyalkyl, alkyl and like, an aromatic radical such as phenyl, diphenyl oxide, biphenyl sulfide, biphenyl methane, triphenyl methane, biphenyl, diphenyl sulfoxide, diphenyl sulfone, anthracyl, naphthyl, phenanthryl or a polymeric or oligomeric substrate such as a polymer having recurring pendant aromatic groups in the polymeric backbone or other oligomeric or polymeric groups in the backbone or pendant to it, such as poly(naphthalene), poly(ethylene), poly(acetylene), poly(acrylic acid), phenolic, poly(phenylene), poly(acene), poly(perinaphthalene), polystyrene, poly (2-methylstyrene), poly(4-phenylstyrene), poly(2-vinyl naphthalene), poly(vinyl benzoate), poly(benzyl methacrylate). Preferred substrates are rigid. For example, aromatics and fused ring systems are preferred over aliphatic systems. In the particularly preferred embodiments of the invention, the substrate is aromatic and in the most preferred embodiments of the invention the substrate is phenyl or naphthyl.

Dopants for use in this invention may vary widely include oxidizing dopants and protonic acid dopants. Illustrative of useful oxidizing dopants are $NO_2$+ and Fe(III) salts such as those of the formulas $NO_2R_7SO_3$, $NO_2R_7CO_2$, $NO_2R_7SO_2$, $Fe(R_7SO_3)_3$, $Fe(R_7CO_2)_3$, and $Fe(R_7SO_2)_3$, which give rise to doped polymers containing dopant anions of the formulas: $R_7SO_3$-, $R_7CO_2$- and $R_7SO_2$-, wherein $R_7$ is an organic radical having the required hydrogen bonding substituent.

In the preferred embodiments of the invention, the dopant is an organic protonic acid. The acid functionality of the dopant may vary widely. The only requirement is that the acid is capable of partially or completely protonating the conjugated polymer to form a charge-tranfer complex comprising the dopant anion and the polymer cation. For example, in the case of polyaniline, the acid should be capable of protonating the nitrogen of the amine linkage, imine linkage or a combination thereof. This can usually be accomplished when the pKa of the acid function is less than that of the conjugated polymer in the doping medium. In the case of polyaniline, acids having a pKa of less than about 5 are preferably used. Such acid functionalities include but are not limited to sulfur or phosphorus acid functionalities such as sulfonic acid functionalities, sulfuric acid functionalities, phosphorous acid functionalities, phosphoric acid functionalities, phosphonic acid functionalities, phosphinic acid functionalities. Preferred acid functionalities are sulfur acid functionalities, more preferred acid functionalities are sulfonic acid functionalities, and most preferred acid functionalities are sulfonic acid functionalities. Whether the dopant(s) is (are) an acid, a salt or an oxidant, the resulting anionic functionality in the conductive polymer complex should preferably be a sulfonate functionality, a sulfinate functionality, a phosphonate functionality or a phosphinate functionality, more preferably they should be a sulfonate or sulfinate functionality and most preferably they should be sulfonate functionality.

Preferred for use in the practice of this invention for doping the particle at or near the surface of the particles are organic acid dopants having anionic moieties of the formulas:

$$R_4(PO_3{=})_r(PO_2{=})_r(SO_2\text{-}_r(PO_2(R_6)\text{-})_r(SO_3)\text{-})_r(CO_2\text{-})_r(PO(R_6)\text{-})(BO_2{=})_r$$

and having a cationic moiety or moieties of the Formula:

$M^{+s}$ wherein at least one of the cationic moieties of the formula $M^{+s}$ is a proton or is a moiety which can be transformed into a proton under use conditions;

$M^{+s}$ is a cationic species having a positive charge s;

s is an integer equal to or greater than 1, preferably from 1 to about 8;
$R_4$ is an organic radical, with the proviso that $R_4$ includes one or more hydrogen bonding groups;
r is an integer equal to or greater than 1, preferably from 1 to about 8;and
$R_6$ is hyydrogen, alkyl, aryl, alkylaryl, aryloxy, arylalkoxy, alkylsulfinyl, alkylthio, alkylsulfonyl or alkoxy.

In these preferred embodiments of the invention, it is preferred that at least one acid functionality and at least one hydrogen bonding group not be adjacent to each other. More preferred are those dopants in which r is greater than 1. Although not critical, it is most preferred that the distance between at least one acid functionality and at least one hydrogen bonding group is such that they are far enough apart so that the acid functionality and the hydrogen bonding group are capable of coordinating along the backbone of a single conjugated polymer chain. For example in the case of polyaniline the dopant is capable of coordinating with adjacent amine and/or imine linkages along the backbone of a single chain of polyaniline. In the case of unsubstituted polyaniline, this distance is from 0.5-0.6 nm (5 to 6 Å). More preferred for use in the practice of this invention as dopants are acids or acid derivatives of the formula:

$$R_4(PO_2(R_6)M)_g(PO_3M_2)_f(SO_3M)_c(CO_2M)_d(PO_2M_2)_t(SO_2M)_h\ (PO(R_6)M)_i$$

or

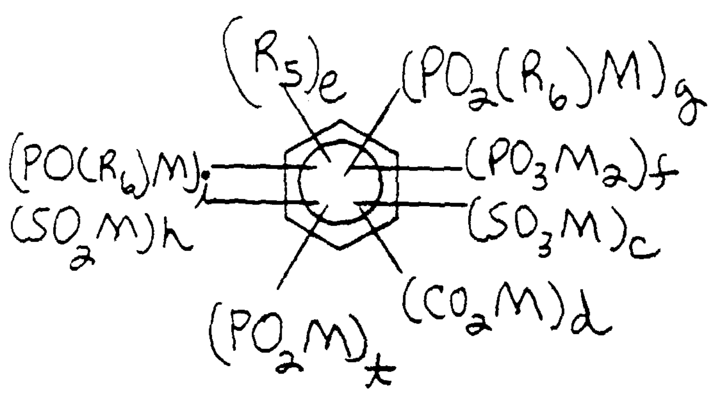

wherein:

M is $H^+$, or other metal or non-metal cation with the proviso that at least one of M is $H^+$ or a moiety which can be thermally or chemically transformed into a proton under use conditions, such as $NH_4+$, $N(CH_3)_2H_2+$, $PhS^+$, $N(C_2H_5)H_3+$ and the like;
t is 0, 1, 2, 3 or 4;
h is 0, 1, 2, 3 or 4;
i is 0, 1, 2, 3 or 4;
c is 0, 1, 2, 3 or 4;
d is 0, 1, 2, 3 or 4;
f is 0, 1, 2, 3 or 4;
g is 0, 1, 2, 3 or 4, with the proviso that at least one of c, d, f, g, h, i or t is other than 0;
e is 0, 1 or 2; and
$R_4$ is alkyl substituted with one or more aryl, alkythio, alkoxycarbonyl, alkylcarbonyl, carbonyl, alkylcarbonylalkyl, alkylsulfinylalkyl, alkylsulfonylalkyl, alkylaminoalkyl, aryloxy, hydroxy, alkylamino, dialkylamino, alkylarylamino, halo, amino, (alkyl)arylamino, di(alkyl)arylamino, alkylaryl, alkylthioalkyl, alkylarylamino, alkoxy, alkoxyalkyl, alkylaryl, alkylsulfinyl, alkylsulfonyl, dialkylaminoalkyl, aryloxyalkyl, aryloxyalkoxy, alkoxyaryl, alkylaryloxy or alkoxyaryloxy with the proviso that $R_4$ includes at least hydrogen bonding group;
$R_5$ is the same or different at each occurrence and is a hydrogen bonding group such as halo, carbonyl, or hydroxy, or an unsubstituted or substituted alkoxycarbonyl, alkylcarbonyl, alkylcarbonylalkyl, alkylsulfinylalkyl, alkylsulfonylalkyl, alkylaryloxy, alkoxyaryloxy, alkylaminoalkyl, alkylamino, dialkylamino, alkylarylamino, (alkyl)arylamino, di(alkyl)arylamino, alkylthioalkyl, amino, alkylarylamino, alkoxy, alkoxyalkyl, alkylaryl, alkylsulfinyl, alkylthio, alkysulfonyl, dialkylaminoalkyl, aryloxyalkyl, aryloxyalkoxy, alkoxyaryl, alkylaryloxy or alkoxyaryloxy, or substituted alkyl or alkylaryl, wherein permissible substituents include hydrogen bonding groups such as sulfonic acid or a salt or

ester thereof, sulfinic acid or a salt or ester therof, phosphonic acid or a salt or ester thereof, phosphinic acid or a salt or ester thereof, phosphoric acid or a salt or ester thereof, carboxylic acid or a salt or ester thereof, boric acid or a salt or ester thereof, perhaloalkyl, phenyl, alkoxy, aryloxy, halo, cyano, amino, haloalkyl, hydroxy, nitro, or any two or more $R_5$ substituents together may form an alkylene or alkenylene chain completing a ring system such as a fused or spiro ring system which may include one or more cyclic rings, which chain is substituted with one or more of the aforementioned hydrogen bonding groups, or $R_5$ is a moiety of the formula:

$$-(OCH_2CH_2)_qOCH_3 \text{ or } -(OCH_2CH(CH_3))_qOCH_3$$

wherein:
q is a positive whole number from 6 to about 12 or alkyl substituted with said moiety; and
$R_6$ is hydrogen, alkyl, aryl, alkylaryl, aryloxy, arylalkoxy, alkylsulfinyl, alkylthio, alkylsulfonyl or alkoxy.

In the particularly preferred embodiments of this invention, useful dopants are acids and/or acid derivatives of the above formula:

$$R_4(PO_2(R_6)M)_g(PO_3M_2)_f(SO_3M)_c(PO_2M_2)_t(SO_2M)_h(PO(R_6)M)_i$$

or

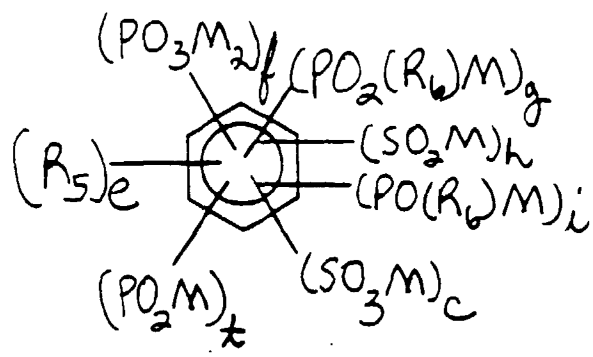

wherein:

c, t, f, g, h and i are the same or different at each occurrence and are 0, 1, 2, or 3, with the proviso that at least one of c, d, t, f or g, i or h is other than 0;
e is 1 or 2;
$R_4$ is substituted alkyl or phenylalkyl wherein permissible substituents are selected from the group consisting of alkoxy, halo, phenyl, hydroxy, carboxy, carboxylic acid, alkoxyphenyl, alkylphenyl, alkylphenoxy, carbonyl, phenoxy, sulfophenoxy, haloalkyl, amino, perhaloalkyl, alkoxyphenyl, alkylphenyl, alkylthio or alkylthioalkyl with the proviso that $R_4$ is substituted with one or more hydrogen bonding substituents;
$R_5$ is the same or different at each occurrence and is a hydrogen bonding group selected from the group consisting of alkoxy, halo, phenyl, hydroxy, amino, alkoxyphenyl, carboxy, carboxylic acid, alkylphenoxy, alkylphenyl, phenoxy, sulfophenoxy, haloalkyl, perhaloalkyl, alkoxyphenyl, alkylphenyl, alkylthio or alkylthioalkyl or any two $R_5$ substituents together may form an substituted alkylene or alkenylene chain completing an aromatic or an alicyclic ring system wherein permissible substituents are one or more of said hydrogen bonding groups $R_5$ is a moiety of the formula:

$$-(OCH_2CH_2)_qOCH_3 \text{ or } -(OCH_2CH(CH_3))_q\ OCH_3$$

wherein:
q is a positive whole number from 6 to about 12, with the proviso that $R_5$ is a hydrogen bonding substituent a substituent which is substituted with a hydrogeen bonding substituent.
$R_6$ is hydrogen, alkyl, alkoxy or substituted or unsubstituted phenoxy, phenyl or phenylalkyl wherein permissible

substitutients are alkyl, alkoxy or a combination thereof; and
M is $H^+$, or other metal or non-metal cation, with the proviso that at least one of M is $H^+$ or a moiety which can be thermally or chemically transformed into a proton under use or process conditions.

In the most preferred embodiments of this invention, useful dopants for doping the particles at or near its surface are acids and/or acid derivaties of the formula:

$$R_4(PO_2M)_t(SO_3M)_c(PO_3)_f$$

or

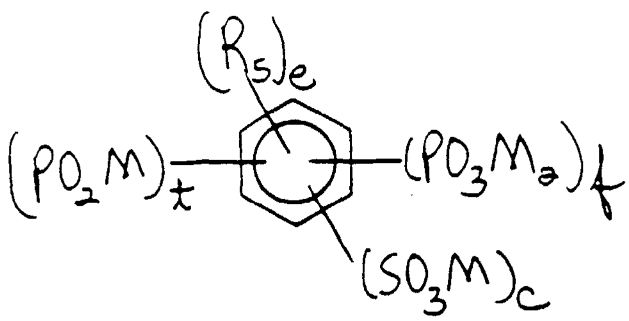

wherein:

c, f and t are the same or different and are 0, 1 or 2, with the proviso that at least one of c, f and t is not 0;
e is 1 or 2;
$R_4$ is alkyl or phenylalkyl substituted with a hydrogen bonding substituent such as one or more carbonyl, halo, carboxyli acid or a salt thereof, phenoxy, hydroxy, sulfophenoxy or alkoxy substituents with the proviso that at least one acid functionality and at least one hydrogen bonding group are not substituted to adjacent carbon atoms ;
$R_5$ is the same are different at each occurrence and is a hydrogen bonding group selected from the group consisting of hydroxy, halo, carbonyl, phenoxy, or carboxylic acid or a salt thereof, or is alkyl, phenoxy, phenylalkyl or phenyl group substituted with one or more hydrogen bonding group such as phenoxy, carbonyl, protonic acid group or a salt or ester thereof (e.g. carboxylic acid, phosphinic acid, sulfonic acid, phosphonic acid, sulfonic acid and the like), hydroxy, halo, amino, cyano, sulfophenoxy or alkoxy substituents or any two or more $R_5$ substituents together may form an alkylene or alkenylene chain completing an aliphatic or aromatic ring system which is substituted with one or more of the aforesaid hydrogen bonding groups or one or more protonic acid functions or is substituted with an alkyl, phenylalkyl, phenoxy, alkylphenyl or phenyl group substituted with one or more of the aforesaid hydrogen bonding groups;
M is $H^+$ or other metal or non-metal cation, with the proviso that at least one of M is $H^+$ or is a moiety which can be thermally transformed into a proton under use or process conditions.

In the especially preferred embodiments of this invention, useful dopants for doping the particles at or near its surface are acids or acid derivatives of the formula:

$$R_4(SO_3M)_c$$

or

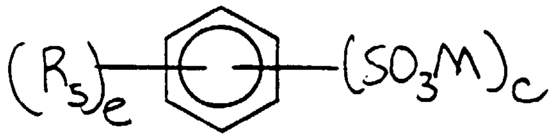

wherein:

c is 1, 2 or 3;
e is 1 or 2;
$R_4$ is alkyl having at least about seven carbon atoms (preferably from about seven carbon atoms to about twenty or thirty carbon atoms) substituted with one or more hydrogen bonding groups such as halo (preferably fluoro), carbonyl, carboxylic acid, carboxy, hydroxy, phenoxy, phenoxy substituted with one or more sulfonic acid or a salt thereof and the like;
$R_5$ is a hydrogen bonding group such as halo (preferably fluoro), a protonic acid or a salt thereof (preferably carboxylic acid or carboxy), carbonyl, hydroxy, alkoxy, alkoxyalkyl, phenoxy, or phenoxy substituted with one or more sulfonic acid or a salt thereof and the like; or any two $R_5$ substituents together may form an alkenylene chain completing a naphthalene ring system which is substituted with one or more of the aforesaid hydrogen bonding groups; and
M is $H^+$ or other metal or non-metal cation or a moiety which can be thermally tranformed into a proton under process conditions.

In the process of the embodiment of this invention of choice, the dopant for doping the particle at or near its surface is a sulfonic acid or sulfonic acid derivative of the formula:

$$R_4(SO_3)$$

or

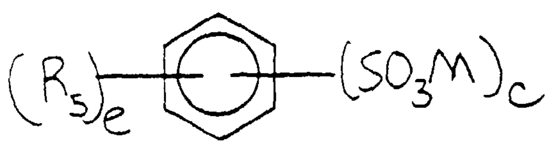

wherein;

$R_4$ is substituted alkyl wherein permissible substituents are one or more fluoro groups, carboxylic acid or a salt thereof, hydroxy groups or a combination thereof;
c is 1 or 2;
e is 1 or 2;
$R_5$ is the same or different at each occurrence and is one or more hydroxy, phenoxy substituted with one or more sulfonic acid or a salt thereof fluoro or carboxylic acid group or a salt thereof, or any two $R_5$ substituents together may form a divalent alkenylene chain completing a naphthalene ring, which ring substituted with one or more fluoro groups, phenoxy substituted with one or more sulfonic acid or a salt thereof, sulfonic acid or a salt thereof, carboxylic acid groups or a salt thereof or hydroxy; and
M is a proton, or other metal or non-metal cation, with the proviso that at least one of M is proton.

The following is a listing of dopants which are useful in the practice of the most preferred embodiments of this invention for formation of the most preferred dopant anions.

perfluoro butyl sulfonic acid
2,5-dihydroxy-1,4-benzene disulfonic acid,
trion (4,5-dihydroxy-1,3-benzene disulfonic acid),
4-sulfophthalic acid,

1,8-dihydroxynaphthalene-3-6-disulfonic acid,
3,6-dihydroxynaphthalene-2,7-disulfonic acid,
4,5-dihydroxynaphthalene-2,7-disulfonic acid,
4-hydroxy biphenyl sulfonic acid
6,7-dihydroxy-2-naphthalene sulfonic acid,
1-naphthalene-5,7-dinitro-8-ydroxy sulfonic acid,
1-naphthalene-4-hydroxy sulfonic acid,
4-bromobenzene sulfonic acid,
4-hydroxy-5-isopropyl-2-methyl benzene sulfonic acid
3,4-diamino benzene sulfonic acid
3,4-dinitro benzene sulfonic acid,
2-methoxy benzene sulfonic acid,
1-naphthalene-5-ydroxy sulfonic acid,
1-naphthalene-7-hydroxy sulfonic acid,
1-naphthalene-3-hydroxy sulfonic acid,
2-naphthalene-1-hydroxy sulfonic acid,
4-phenylamino benzene sulfonic acid,
1,3-naphthalene-7-hydroxy disulfonic acid trifluoromethane sulfonic acid,
anthraquinone sulfonic acid,
anthraquinone disulfonic acid,
4-hydroxybenzene sulfonic acid,
1-naphthol-3,6-disulfonic acid,
diphenylether-4,4'-disulfonic acid,
diphenylsulfone-4,4'-disulfonic acid,
2,5-dihydroxy-1,4-enzene disulfonic acid sulfosalicylic acid
4-chlorobenzene sulfonic acid

Less preferred but also useful as dopants are phosphorus based organic acids which contain hydrogen bonding groups as for example phosphonoformic acid and 2-carboxyethylphonphonic acid.

The amount of dopant added to the conjugated polymer may vary widely. In general, sufficient dopant is added to the conjugated polymer such that the conductivity of at least about $10^{-9}$ $ohm^{-1}am^{-1}$. The upper level of conductivity is not critical and will usually depend on the type of conjugated polymer employed and the dopant. Preferably, the highest level of conductivity that can be obtained is provided without unduly adversely affecting the environmental stability of the conjugated polymer. In the preferred embodiments of the invention, the amount of dopant employed is sufficient to provide a conductivity of at least about $10^{-8}ohm^{-1}cm^{-1}$ and in the particularly preferred embodiments is sufficient to provide a conductivity of from about $10^{-4}ohm^{-1}cm^{-1}$ to about $10^{+3}ohm^{-1}cm^{-1}$. Amongst these particularly preferred embodiments, most preferred are those embodiments in which sufficient dopant is employed to provide a conductivity of at least about $10^{-3}ohm^{-1}cm^{-1}$ to about $10^{+3}ohm^{-1}cm^{-1}$, with amounts sufficient to provide a conductivity from about $10^{0}ohm^{-1}cm^{-1}$ to about $10^{+3}ohm^{-1}cm^{-1}$ usually being the amounts of choice.

The method of forming the thermally stable electrically conductive conjugated polymer complex is not critical and may vary widely. Suitable techniques are those described in U.S. Patent Nos. 4,442,187 and 4,321,114. Such processes include the direct chemical polymerization of precursor molecules of the conjugated polymer as for example the molecules of Formula I in the presence of the dopant chemical species containing anions such as $R_1(SO_3-)_r$ and $R_1(OPO_2=)_r$. Also such processes include electrochemical doping of neutral conjugated polymer as described in U.S. Patent No. 4,321,114. Another useful process is electrochemical polymerization of the precursor monomer of the conjugated polymer such as aniline and its derivatives as described in Formula I, in the presence of a dopant capable of producing anions in the doped polymer such as $R_1(SO_3-)_c$ and $R_1(OPO_2=)_r$ are described in Kobayaski, Tetsuhiko, et al., J. Electroanal. Chem., "Electrochemical Reactions Concerned with Electrochromism of Polyaniline Film-Coated Electrodes", 77, pp. 28-29 (1984). Yet another process of forming the conjugated polymer of this invention involves the exchange of non-thermally stable dopants in the conjugated polymer with a suitable dopant anion such as $R_1(SO^-_3)_r$, $R_1(OPO^=_2)_r$ and/or $R_1(OPOH^-)_r$. For example, in this process, conjugated polymer can be doped by contacting same with a solution containing excess of a compound which ionizes in solution into a suitable dopant such as $R_1(SO^-_3)_r$ $M^{+r}$, $R_1(OPO^=_2)_rM^{+2r}$ and $R_1$ $(OPOH^-)M^{+r}$.

The conjugated polymer may be doped with a single dopant or with more than one dopant. When more than one dopant is used, the dopants of this invention are preferably structured in a core/skin arrangement with other dopants within the basic morphological unit of the conjugated polymer (fibril, globule, aggregate, and the like), or the dopants may be mixed throughout the unit. When the highest thermal stability is desired, it is generally preferred that the most thermally stable dopant anion be incorporated as the skin (surface) dopant. This skin preferably covers the smallest

morphological unit accessible (the primary particle). When high dispersibility is required, the surface dopant anion is preferably an anion containing a long aliphatic moiety in which case the thermally stable anions of this invention are preferably incorporated in the core of said particles

Another aspect of this invention relates to the production of a composition comprising one or more thermally stable doped electrically conductive conjugated polymers obtained according to this invention, and one or more thermoplastic polymers, thermoset polymers or a combination thereof. One advantage of this composition is that because of the thermal stability of the electrically conductive conjugated polymer, articles can be fabricated from these compositions using conventional melt or heat processing techniques. Also, composites of these conjugated polymers can be used at temperatures higher then heretofore available to conductive conjugated polymers. The proportion of conjugated polymer to thermoplastic or thermoset polymer is not critical and may vary widely, depending on the use of the composition. For example, for those uses which require the composite having higher conductivities, i.e., up to or greater than about $10^0 ohm^{-1} cm^{-1}$ the amount of electrically conductive conjugated polymer will tend to be relatively high, as for example greater than about 15 weight percent, based on the total weight of the composition. Conversely, for those uses in which lower conductivities are required, i.e., down to or less than about $10^{-6} ohm^{-1} cm^{-1}$, the amount of electrically conductive polyaniline will tend to be relatively low, down to or less than about 5 weight percent based on the total weight of the composition. In the preferred embodiments of the invention, the amount of electrically conductive conjugated polymer is from about 1 to about 60 weight percent based on the total weight of the composition, and in the particularly preferred embodiments of the invention the amount of conductive conjugated polymer is from about 5 to about 40 weight percent on the aforementioned basis. Amongst these particularly preferred embodiments most preferred are those embodiments in which the composition comprises from about 5 to about 35 weight percent of the electrically conductive conjugated polymer based on the total weight of the composition.

In general, the amount of thermoplastic resin, thermosetting resin or combination thereof is from about 25 to about 99 wt% based on the total weight of the matrix. In the preferred embodiments of the invention, the amount of the resin (s) is from about 30 to about 99 wt% based on the total weight of the matrix. In the particularly preferred embodiments, the amount of resin(s) in the matrix is from about 50 to about 95 wt% based on the weight of matrix. In the most preferred embodiments of the invention, the amount of resin(s) in the matrix is from about 55 to about 70 wt% based on the total weight of the matrix.

Thermosetting resins useful in the practice of this invention may vary widely. Illustrative of useful thermosetting resins are alkyds such as those derived from esterification of polybasic acids, as for example, phthalic anhydride, fumaric acid, maleic anhydride, isophthalic acid, terephthalic acid, trimesic acid, hemimellitic acid, succinic anhydride, fatty acids derived from mineral or vegetable oils, and polyhydric alcohols as for example glycerol, ethylene glycol, propylene glycol. Other useful thermosetting resins are acrylics such as crosslinkable polyacrylics, polyacrylates, epoxydiacrylates, urethane diacrylates. Still other useful thermosetting resins are amino resins derived from reaction between formaldehyde and various amino compounds such as melamine, urea, aniline, ethylene urea, sulfonamide, dicyanodiamide Other useful thermosetting resins include urethanes derived from reaction of polyisocyanates or diisocyanates such as 2,6-tolylene diisocyanate, 2,4-tolylene diisocyanate, 4,4'-diphenyl-methane diisocyanate, 4,4'-dicyclohexylmethane diisocyanate, and polyols such as glycerin, ethylene glycol, diethylene glycol. Exemplary of still other thermosetting resins useful in the practice of this invention are unsaturated polyesters derived from reaction of dibasic acids such as maleic anhydride, fumaric acid, and dihydric alcohols such as ethylene glycol, propylene glycol; and silicones such as dimethyldichlorosilane.

Yet another class of useful thermosetting resins are epoxies based on saturated or unsaturated aliphatic, cycloaliphatic, aromatic and heterocyclic epoxides. Useful epoxides include those based on glycidyl ethers derived from epichlorohydrin adducts and polyols, particularly polyhydric phenols. Another useful epoxide is the diglycidyl ether of bisphenol A. Additional examples of useful polyepoxides are resorcinol diglycidyl ether, 3,4-epoxy-6-methylcyclohexylmethyl-9,10-epoxystearate, pentaerythritol tetrakis(3,4-epoxycyclohexanecarboxylate), vinylcyclohexene dioxide, 3,9-bis(3,4-epoxycyclohexyl) spirobi-(methadioxane). Useful thermosetting resins also include phenolic resins produced by the reaction of phenols and aldehydes. Useful phenols include phenol, o-cresol, p-tert-butylphenol, p-tert-octylphenol, p-nonylphenol, 2,3-xylenol, resorcinol, bisphenol-A. Useful aldehydes include formaldehyde, acetaldehyde, isobutyraldehyde, glyoxal, furfural. Other useful thermosetting resins are aromatic vinylesters such as the condensation product of epoxide resins and unsaturated acids usually diluted in a compound having double bond unsaturation such as vinylaromatic monomer as for example styrene and vinyltoluene, and diallyl phthalate. Illustrative of useful vinylesters are diglycidyl adipate, diglycidyl isophthalate, di-(2,3-epoxybutyl) adipate, di-(2,3-epoxybutyl) oxalate, bisphenol-A-fumaric acid polyester.

Preferred thermosetting resins for use in the practice of this invention are vinyl esters, unsaturated polyesters, epoxies and phenolics. Particularly preferred thermosetting resins are vinyl esters, epoxies and phenolics, with vinylesters being the thermosetting resin of choice.

Thermoplastic polymers for use in the formulation of the composition obtained according to this invention may vary widely. Illustrative of such polymers are polyesters such as poly(pivaloyl lactone), poly(para-hydroxybenzoate), poly(ethylene oxybenzoate), poly(ethylene terephthalate), poly(1,4-cyclohexane dimethylene terephthalate) ; polyamides such as poly(4-aminobutyric acid) (nylon 4), poly(6-amino-hexanoic acid) (nylon 6), poly(12-aminododecanoic acid) (nylon 12), poly(hexamethylene adipamide) (nylon 6,6), poly(hexamethylene sebacamide), (nylon 6,10), poly[bis (4-aminocyclohexyl)-methane-1,10-decanedicarboxamide] (Quiana)(trans), poly(metaphenylene isophthalamide) (Nomex), poly(p-phenylene terephthalamide) (Kevlar) ; polycarbonates such as poly[methane bis(4-phenyl)carbonate], poly[1,1-ethane bis(4-phenyl)carbonate], poly[2,2-propane bis(4-phenyl)carbonate], ; polymers derived from the polymerization of α,β-unsaturated monomers such as polyethylene, acrylonitrile/butadiene/styrene terpolymer, polypropylene, poly(4-methyl-1-pentene), polyisobutylene, poly(isoprene), 1,2-poly(1,3-butadiene) (isotatic), 1,2-poly(-butadiene) (syndiotatic), polystyrene, poly(vinyl chloride), poly(vinylidene fluoride), poly(vinylidene chloride), poly(tetrafluoroethylene) (Teflon), poly(chlorotri-fluoroethylene), poly(vinyl alcohol), poly(methyl acrylate), poly(ethyl acrylate), poly (methyl methacrylate), polyacrylonitrile, polyacrylamide; polydienes such as poly(1,3-butadiene) (cis), poly(1,3-butadiene) (trans), poly(l,3-butadiene)(mixt.), (cis) ; polyoxides such as poly(ethylene oxide), poly [2,2-bis(chloromethyl)-trimethylene-3-oxide] (penton), poly(2,6-dimethyl-l,4-phenylene oxide) (PPO), poly(2,6-diphenyl-1,4-phenylene oxide) (Texax, P3O); polysulphides such as poly(propylene sulphide), poly (phenylene sulphide) ; polysulfones such as poly [4,4'-isopropylidene diphenoxy di(4-phenylene) sulphone]; noryl; polyphenylene sulfides; and mixtures thereof.

In the preferred embodiments of the invention, the non-conductive homopolymer or copolymer is a thermoplastic homopolymer or copolymer. Preferred thermoplastic polymers are polyamides, polyesters, poly(carbonates), poly(α-olefins), poly(vinyls), and polysulfones.

More preferred thermoplastic homopolymer or copolymers are polyamides, polycarbonate, polyesters, poly(α-olefin), polyvinyls and halogenated poly(α-olefins), and most preferred thermoplastic polymers are poly(ethylene terephthalate), nylon-6, nylon-6,6, nylon-12, poly(vinylchloride), poly(chlorotrifluoro ethylene), polyethylene terephthalate glycol, polyethylene, polypropylene, and acrylonitrile/butadiene/ styrene terpolymer (ABS).

In the particularly preferred embodiments of the invention the preferred thermoplastic material is a polyurethane. The composition obtained according to this invention may include various optional components such as plasticizers, blending aids, colorants, flame-retardants, or components which either fill or form a substrate for the composition to be cast from the melt or solution. These other components may vary widely and may include any material known for use in conventional polymer compositions. Illustrative of such other components are such material as carbon, metal conductors, reinforcing fibers, inert fillers, glass beads, clays, other conductive and non-conductive polymers, conductive ceramics, super-conductive ceramics.

The composition obtained according to this invention can be prepared using conventional techniques as for example conventional melt or solution blending techniques. For example, such compositions can be formed by heating and mixing a mixture of the various components to a temperature which is equal to or greater than the melting point or flow point of at least one of the polymer components to form a molten intimate mixture to which optional components may be added as desired. Thereafter the mixture can be formed into a desired article through use of any conventional shape forming technique. For example, the molten mixture can be formed into a desired article through use of any conventional shape forming technique. For example, the molten mixture can be spread on a surface and allowed to cool forming free standing films or coatings. The molten mixture can be extruded through a die to form films or fibers, or injection molded into a suitable mold to form molded parts having the shape of the mold. The manner in which the molten mixture is formed is not critical and conventional methods can be employed. For example, the molten mixture can be formed through use of conventional polymer and additive blending means, in which the polymeric components are heated to a temperature equal to or greater than the melting point of at least one of the polymers, and below the degradation temperature of each of the polymers. Ultrasonification can be used to improve dispersion of the non-soluble phases. The desired amount of the optional ingredients in a liquid or powdered from is added to the melted polymers while at the same time vigorously agitating the melt as for example by stirring or irradiating with ultrasound, or added prior to melting and mixing.

In a solution process for the preparation of the composition, a solution of the desired host polymer in a suitable solvent with a or without a dopant solute is formed. The desired optional components in the desired amounts may be dissolved or dispersed in the solution. The dissolved and/or dispersed polymers can be solidified into a desired shape by removal of the solvent through use of conventional techniques. For example, by removal of the solvent from a solution spread on a surface, films can be formed of any desired thickness. By extruding the solution through a die, fibers and films can be made. Similarly, by removing the solvent from the solution in a mold, shaped articles conforming in shape to the mold can be prepared. If the original solution did not include a suitable dopant, the shaped article can be exposed to a suitable dopant to dope the polyaniline. In the preferred embodiments of the invention, however, doped polyaniline is used to form the solution.

In the most preferred embodiment, the components of the mixture can be granulated, and granulated components mixed dry in a suitable mixer, as for example using ultrasonification or a tumbler or a Branbury Mixer, as uniformly as possible. Thereafter, the composition is heated and further mixed in an extruder when at least one of the polymers components is melted. As described above, the fluid mixture is thereafter ejected with cooling.

The electrically conductive conjugated polymer composition obtained according to this invention can be used for any purposes for which conductive polymers are useful. For example, the composition can be used to form electrically conductive articles for shielding purposes, anti-static purposes or adhesive. Examples of articles include conductive polymer housings for EMI Shielding of sensitive electronic equipment such as microprocessors, infrared, radio frequency and microwave absorbing shields, flexible electrically conducting connectors, conductive bearings, brushes and semiconducting photoconductor junctions, electrodes, capacitors, optically transparent or non-transparent corrosion-preventing coatings for corrodible materials such as steel, antistatic materials and optically transparent or non-transparent coatings for packaging electronic components, antistatic carpet fibers, waxes for floors in computer rooms, antistatic finishes for CRT screens, aircraft, auto windows, electrostatic dissipative packaging for electronics.

The following specific examples are presented to more particularly illustrate the invention.

EXAMPLE 1

Polyaniline tosylate (PAni OTs) was prepared from aniline, p-toluene sulfonic acid (PTSA or tosylic acid), and ammonium persulfate solution by first combining the aniline and the acid, and then slowly adding the ammonium persulfate solution to the acid and aniline solution in approximately one hour. The solids which were formed were then filtered and washed successively three times with water, once with 10% solution of PTSA, and finally with a 2% solution of PTSA in methanol. After filtering the solids were dried in a vacuum oven at 130°C until the temperature of the powdered solids reached 100°C. The water content of the solids was determined to be less than 3% by weight.

EXAMPLE 2

Polyaniline tosylate was prepared as in Example 1 with the exception that the solids were filtered and washed successively three times with hot water (70°C) and the final washes containing PTSA were eliminated. The filter cake was not dried but kept saturated with water. Elemental analysis determined that the molar ratio of sulfur to nitrogen was 0.30, compared with a theoretical maximum of 0.50. This partially undoped polyaniline tosylate was retained for further redoping studies.

EXAMPLE 3

Polyaniline tosylate particles were redopedpreferentially on their surface with dopants other than tosylic acid to produce a skin/core dopant profile within each particle, particle aggregate, and/or primary particle. The filter cake of Example 2 was reslurried in a solution of an acid other than tosylic acid with the aid of a high speed homogenizer. In successive experiments, acid solutions having a pH of approximately 1 were prepared from benzene sulfonic acid (BZSA), 4-hydroxybenzene sulfonic acid (HBSA), biphenyl p-sulfonic acid (BPSA), 1,5-naphthalene disulfonic acid (N15SA), 2,6 naphthalene disulfonic acid (N26SA), 1-naphthol 3,6-disulfonic acid (H1N36SA), 2,5 dihydroxybenzene 1,4-disulfonic acid (H25B14SA), 3,6-dihydroxy naphthalene 2,7-disulfonic acid (H36N27SA), 6-amino-4-hydroxynapthalene sulfonic acid (6A4HNSA), 3-hydroxy-1-propane sulfonic acid (HPSA), and a random polymeric sulfonate with average molecular weight of approximately 900 with the following structure (HPSSA):

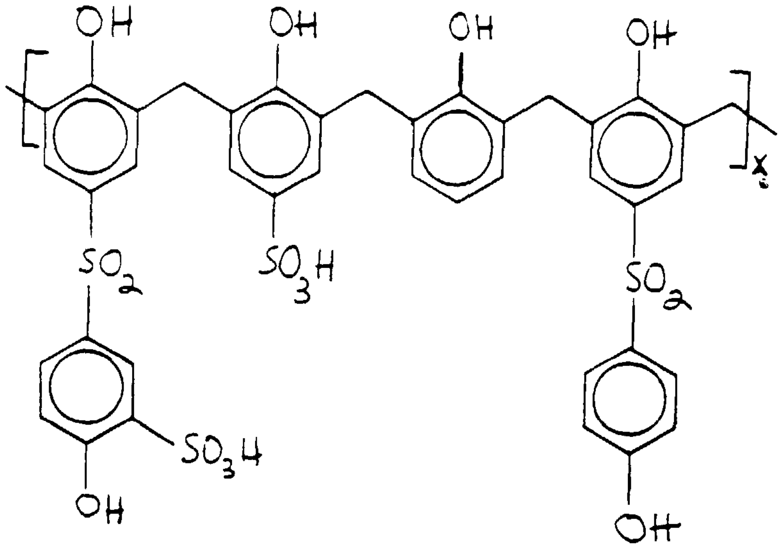

The suspension of the polyaniline tosylate was stirred in successive preparations in one of the above acids for one hour at 50°C. The suspension was then allowed to cool while stirring for a minimum of an additional 3 hours. This procedure was found to nearly completely exchange the tosylic acid originally present for the new acid. The solids were filtered and a methanol solution of the given acid was then added and the mixture was stirred for an additional 0.5 h. Elemental analysis for the sulfur to nitrogen ratio of the polyaniline produced is summarized in Table 1 below. Typical water content of the samples was found to be 1 to 5 percent by weight.

TABLE 1

| POLYANILINE | S/N MOLAR RATIO |
|---|---|
| PAni OTs | 0.48 |
| PAni BZS | 0.495 |
| PAni BPS | 0.461 |
| PAni N15S | 0.419 |
| PAni N26S | 0.453 |
| PAni HBS | 0.527 |
| PAni H1N36S | 0.410 |
| PAni H25B14S | 0.401 |
| PAni H36N27S | 0.436 |
| PAni 6A4HNS | 0.324 |
| PAni HPS | 0.455 |
| PAni HPSSA | 0.396 |

*from Example 1

EXAMPLE 4

The relative thermal stabilities of the various forms of polyaniline, described in Examples 1 to 3 above, were determined by the following procedure: The powdered polyaniline was compressed into pellets with a diameter of 0.7 cm and a thickness of about 0.09 cm. The pellets were placed in an apparatus in which the given pellet was contacted by gold pins at four equally spaced points (90 degrees apart) near the circumference of the pellet. In this configuration a four-probe resistance measurement could be made which could be used to calculate the bulk conductivity of the pellet from the equation s=0.215/(Rd), where s is conductivity in S/cm (or $ohm^{-1}cm^{-1}$), R is resistance in ohms, and d is pellet thickness in cm. The pellet was maintained in an atmosphere of flowing nitrogen and was held at various constant temperatures (130°C, 150°C, 170°C, 200° C, and 230°C) while the conductivity was observed to decay. In order to insure that all samples were thoroughly dry, the pellets were first held at 150°C for 16 hours before conductivity data were taken. All of the samples exhibited a decay in conductivity as an exponential function of time at a given temperature which could be described by the relation,

$$s(t) = s_o e^{-(t/\tau)\alpha}$$

where s(t) is the conductivity at a time, t; $s_0$ is the initial conductivity at time t = 0; $\tau$ is an experimentally determined characteristic decay time; and the exponent $\alpha$ is an experimentally determined parameter for a given sample at each temperature. The value of $\alpha$ typically lay in a range from 0.77 to 1.0. With the help of this equation a characteristic half-life of the conductivity can be determined at each temperature from the value of $\tau$ and $\alpha$ determined at that temperature according to the relation,

$$t_{1/2} = \tau(\ln 2)^{1/\alpha}$$

where ln is the naperian logarithm and $t_{1/2}$ is the time required for the conductivity to decrease by half (half life). Since the determination of $\tau$ and $\alpha$ can be made from the functional form of the decay at early times, this method does not require that the conductivity be driven down to one half its original value at each temperature. As a result, this method allows the determination of the half lives at the five temperatures listed above on the same sample without unduly altering the thermal decay characteristics of the sample by heavily degrading the sample at each temperature.

The data for the half lives taken as, described above at 130°C, 150°C, 170°C, 200°C, and 230°C was shown to follow an Arrhenius exponential as a function of temperature (T) of the form,

$$t_{1/2} = (t_{1/2})_o e^{Ea/KT}$$

where e is the base of the naperian logarithm and K is the Boltzmann constant. The activation energy, $E_a$, was determined from the slope of a plot of $\ln[t_{1/2}]$ vs the inverse of absolute temperature in degrees Kelvin. The naperian logarithm of the prefactor, $\ln[(t_{1/2})_0]$, was determined from the intercept at 1/T=0. These empirically determined parameters were then used to predict the thermal stability (i.e., the conductivity half life) over a range of temperature extending from 50°C to about 280°C. These data were used to estimate an upper limit for processing temperature ($T_p$) and for continuous use temperature ($T_u$). Temperatures corresponding to maximum processing times of 0.1 h, 1.0 h and 3 h were calculated along with the temperatures where the continuous use time was 5 years. Table II below summarizes the results obtained for the various compositions which were tested.

In Table II, the following abbreviations are used:

(a) "BPS" is biphenylsulfonate,
(b) "BZS" is benzenesulfonate,
(c) "HBS" is 4-hydroxybenzenesulfonate,
(d) "NDS" is naphthalene disulfonate,
(e) "H1N36S is 1-naphthol 3,6-disulfonate,
(f) "HPSS" is partially sulfonated polymer containing methylene-linked phenol and diphenol sulfone groups,
(g) "PDPES" is methylene-linked polymer of diphenyl ether 4-sulfonate,
(h) "DPEDS" is diphenyl ether 4,4'-disulfonate,
(i) "2AO" is dodecyldiphenyl ether disulfonate (DOWFAX 2AO).
(j) "4CLBS" is 4-chlorobenzene sulfonate.
(k) "H25B14S" is 2,5-dihydroxybenzene 1,4-disulfonate.
(l) "H45N27S" is 3,6-dihydroxynaphthalene 2,7-disulfonate.
(m) "4SPHTH" is 4-Sulfophthalate.
(n) "5SSAL" is 5-sulfosalicylate.
(o) "PAni" is polyaniline in its approximately half oxidized (emeraldine) form.

Dopant Compositions listed for example, as OTs/2AO, denote compounds synthesized as in Example 3 which originally possessed tosylate (OTs) dopant anions which have been exchanged for other dopant anions, e.g. 2AO. The conductivity, $S_o$, listed in the table is the conductivity measured at 150°C after the sample has been initially dried in the apparatus at 150°C under flowing nitrogen for about 16 hours.

TABLE III

| USE TEMPERATURE AND PROCESSING TEMPERATURES OF POLYANILINE COMPOSITIONS | | | | | |
|---|---|---|---|---|---|
| Composition | $S_o$ (S/cm) | $T_u$(5y) (C) | $T_p$(0.1h )(C) | $T_p$(1h) (C) | $T_p$(3h) (C) |
| I Alkylarylsulfonates | | | | | |
| PAni OTs | 5.4 | 97 | 239 | 206 | 192 |
| II Multi-sulfonated Aryl | | | | | |
| PAni OTs/2AO | 1.3 | 102 | 257 | 221 | 205 |
| PAni OTs/PDPES | 0.7 | 84 | 247 | 209 | 192 |
| *PAni OTs/HPSS | 1.2 | 98 | 259 | 221 | 205 |
| PAni OTs/DPEDS | 3.4 | 94 | 264 | 223 | 206 |
| PAni OTs/N15DS | 2.4 | 112 | 280 | 239 | 222 |
| PAni OTs/N26DS | 2.5 | 104 | 286 | 242 | 224 |
| *PAni OTs/H25B14S | 5.2 | 105 | 264 | 227 | 211 |
| *PAni OTs/H36N27S | 4.5 | 107 | 252 | 218 | 204 |
| *PAni OTs/H45N27S | 2.5 | 91 | 268 | 225 | 207 |
| *PAni OTs/H1N36S | 2.6 | 79 | 300 | 243 | 219 |
| III Arylsulfonates | | | | | |
| PAni OTs/BPS | 1.3 | 95 | 241 | 207 | 192 |
| PAni OTs/BZS | 5.3 | 99 | 256 | 219 | 203 |
| PAni OT/s4CLBS | 8.3 | 107 | 254 | 220 | 206 |
| *PAni OTs/4SPHTH | 2.6 | 106 | 269 | 230 | 214 |
| *PAni OTs/5SSAL | 9.0 | 128 | 251 | 224 | 212 |
| *PAni OTs/HBS | 12.8 | 118 | 263 | 230 | 216 |

*Compositions containing one or more hydroxy substituents

Table II illustrates the enhancement in both conductivity and thermal stability which can be achieved via the addition of a hydrogen bonding group such as hydroxyl. For example, in comparison with polyaniline doped with unsubstituted benzene sulfonic acid (PAni OTs/BZs), the addition of a hydroxyl group in the para position (PAni OTs/HBs), greatly enhanced both conductivity and thermal stability. In contrast, the addition of a non-hydrogen-bonding group such as methyl (PAni OTs) was shown to reduce thermal stability. Addition of polar groups which have only weak hydrogen bonding capability (e.g., PAni OTs/4CLBS) enhanced conductivity but had only a slight beneficial effect on thermal stability. Hydrogen bonding groups other than hydroxyl (for example, carboxylic acid groups present in PAni OTs/ 4SPHTH) were also shown to provide significant improvements in thermal stability.

Results with the addition of hydroxyl to disulfonic acids were less dramatic (c.f., PAni OTs/N26DS vs PAni OTs/ H36N27S) and showed an increase in conductivity and even a decrease in thermal stability in many cases (with the exception of PAni OTs/HIN36S). While we do not wish to be bound by any theory, this result may be taken to illustrate the potential for multiple hydrogen bonding groups (in the present instance sulfonate and hydroxyl) to bond internally and therefore, to a lesser extent with the polymer. Further illustration of this effect was obtained by comparing the results for PAni OTs/H36N27S with those for PAni OTs/H45N27S. In the latter case, the hydroxyl groups are further removed from the sulfonate sites which was expected to reduce internal interactions within the dopant anion and did lead to an enhanced thermal stability at high temperature. The best thermal stability was obtained with a single hydroxyl group far removed from the sulfonate sites (PAni OTs/H1N36S).

## Claims

1. A method for preparing an electrically conductive substituted or unsubstituted conjugated homopolymer or copolymer cation complex by contacting substituted or unsubstituted positively charged conjugated homopolymer or copolymer cations with negatively charged dopant anions, characterized in that said dopant anions have at least one anionic functionality and at least one hydrogen bonding group.

**2.** A method according to Claim 1 characterized in that the anionic functionality and the hydrogen bonding group are located in the dopant molecule such that they cannot bond to one another.

**3.** A method according to claim 1 wherein said conjugated homopolymer or copolymer is a substituted or unsubstituted polyaniline comprising repeat units of the Formulas II, III or II and III:

Formula II

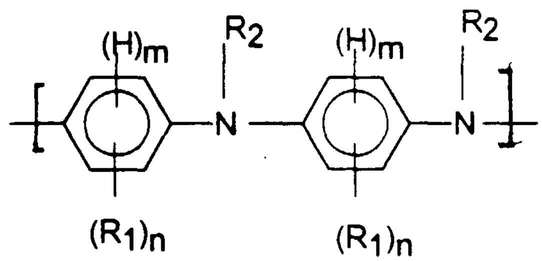

Formula III

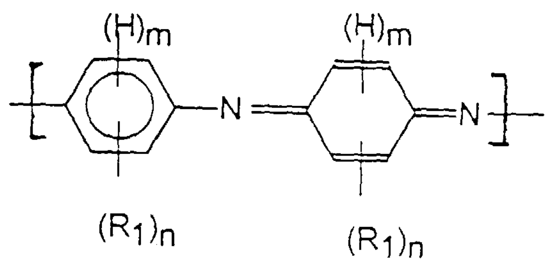

or a combination thereof,
wherein:

n and m are the same or different at each occurrence and are integers from 0 to 4, with the proviso that the sum of n and m is 4;
$R_1$ is phosphinic acid or a salt or ester thereof, phosphonic acid or a salt or ester thereof, sulfonic acid or a salt or ester thereof, boric acid or a salt or ester thereof, phosphoric acid, alkylamino, dialkylamino, arylamino, diarylamino, alkylarylamino, amino, hydroxy, nitro, carboxylic acid or a salt or ester thereof, halo, cyano, deuterium, or substituted or unsubstituted alkyl, alkenyl, alkoxy, cycloalkyl, cycloalkenyl, alkanoyl, alkylthio, alkynyl, dialkylamino, arylamino, diarylamino, alkylarylamino, aryloxy, hydroxy, alkylthioalkyl, alkylaryl, arylalkyl, aryloxy, amino, alkylthioalkyl, alkylaryl, arylalkyl, alkylsufinyl, alkoxyalkyl, alkylsulfonyl, aryl, arylthio, arylsulfinyl, alkoxycarbonyl, alkylsilane, or arylsulfonyl, wherein permissible substituents are one or more amino, alkylamino, dialkylamino, arylamino, diarylamino, phosphinic acid or a salt or ester thereof, alkylarylamino, phosphonic acid or a salt or ester thereof, sulfonic acid or a salt or ester thereof, boric acid or a salt or ester

thereof, phosphoric acid or a salt or ester thereof, carboxylic acid or a salt or ester thereof, halo, nitro, hydroxy, cyano or epoxy moieties; or any two $R_1$ substituents or any one $R_1$ substituent and $R_2$ substituent taken together may form substituted or unsubstitued alkylene, alkynylene or alkenylene chain completing a 3, 4, 5, 6, 7, 8, 9 or 10 membered aromatic, heteroalicyclic, heteroaromatic or alicyclic carbon ring, which ring may optionally include one or more divalent ester, carbonyl, nitrogen, sulfur, sulfinyl, sulfonyl or oxygen, wherein permissible substituents are one or more amino, alkylamino, phosphinic acid or a salt or ester thereof, dialkylamino, arylamino, diarylamino, alkylarylamino, phosphonic acid or a salt or ester thereof, sulfonic acid or a salt or ester thereof, boric acid or a salt or ester thereof, phosphoric acid or a salt or ester thereof, carboxylic acid or a salt or ester thereof, halo, nitro, hydroxy, cyano or epoxy moieties, or $R_1$ is an aliphatic moiety having repeat units of the formula:

$$(OCH_2CH_2)_qO\text{-}CH_3,\ (OCH_2CH(CH_3))_qO\text{-}CH_3,$$

$$(CH_2)_qCF_3,\ (CF_2)_qCF_3 \text{ or } (CH_2)_qCH_3$$

wherein q is a positive whole number; and
$R_2$ is the same or different at each occurrence and is $R_1$ substituents or hydrogen.

**4.** A method according to claim 3 wherein said homopolymer or copolymer is comprised of the Formula IV:

Formula IV

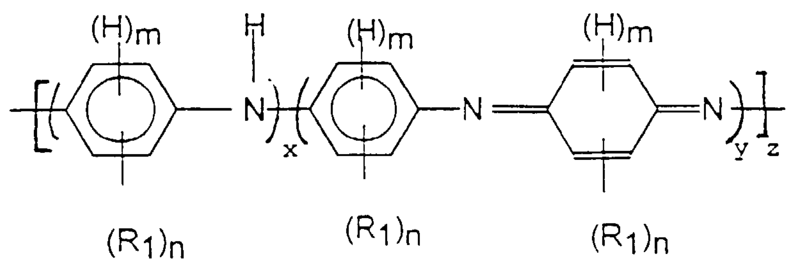

wherein:

x and y are the same or different at each occurrence and are integers equal to or greater than 0, with the proviso that the sum or x and y are greater than 0;
z is an integer equal to or greater than about 1;
n is an integer from 0 to 4;
m is an integer from 0 to 4, with the proviso that the sum of n and m is 4;
$R_1$ is the same or different at each occurrence and is alkyl, alkenyl, alkoxy, cycloalkyl, cycloalkenyl, alkanoyl, amino, alkylamino, dialkylamino, arylamino, diarylamino, alkylarylamino, alkylthio, aryloxy, alkylthioalkyl, alkylaryl, arylalkyl, alkylsulfinyl, alkoxyalkyl, alkylsulfonyl, aryl, arylthio, arylsulfinyl, alkoxycarbonyl, phosphinic acid or a salt or ester thereof, phosphonic acid or a salt or ester thereof, alkylsilyl, boric acid or a salt or ester thereof, arylsulfonyl, carboxylic acid or a salt or ester thereof, halo, hydroxy, nitro, cyano, sulfonic acid or a salt or ester thereof, phosphoric acid or a salt or ester thereof or aryl, alkyl or alkoxy substituted with one or more carboxylic acid or a salt or ester thereof, phosphoric acid or a salt or ester thereof, boric acid or a salt or ester thereof, sulfonic acid or a salt or ester thereof, halo, nitro, cyano, epoxy, hydroxy, phosphinic acid or a salt or ester thereof, or phosphonic acid or a salt or ester thereof or; or any two $R_1$ groups or any one $R_1$ group and $R_2$ group together may form a substituted or unsubstituted alkylene or alkenylene chain completing a 3, 4, 5, 6, 7, 8, 9 or 10 membered heteroaromatic, heteroalicyclic, aromatic or alicyclic carbon ring, which chain may optionally include one or more divalent nitrogen, ester, carbonyl, sulfur, sulfinyl, sulfonyl or oxygen group, wherein permissible substituents are one or more sulfonic acid or salt or ester thereof, carboxylic acid or salt or ester thereof, phosphoric acid or salt or ester thereof, boric acid or salt or ester thereof, halo, nitro,

cyano, epoxy, hydroxy, phosphinic acid or salt or thereof or, phosphonic acid or salt or ester thereof.

**5.** A method according to claim 4 wherein:

$R_2$ is hydrogen;
m is 3 or 4 and n is 0 or 1;
$R_1$ is the same or different at each occurrence and is alkyl or alkoxy having from 1 to 12 carbon atoms or a protonic acid function or a salt thereof;
x is an integer equal to or greater than 1;
y is equal to or greater than 0; and
z is an integer equal to or greater than 5.

**6.** A method according to claim 5 wherein m is 4 and n is 0.

**7.** A method according to claim 1 wherein said dopant anion is substituted by a polar group or polar groups having a net polar group molar contribution greater than 200 J $^{1/2}$ cm$^2$mol$^{-1}$.

**8.** A method according to Claim 7 wherein said dopant anions are organic species of the formulas:

$$R_4(PO_3^{=})_r(PO_2^{=})_r(SO_2^{-})_r(PO_2(R_6)^{-})_r(SO_3^{-})_r(CO_2^{-})_r(PO(R_6)^{-})_r(BO_2^{=})_r$$

$$(PO_3^{=})_r(PO_2^{=})_r(BO_2^{=})_r$$

wherein:

$R_4$ is an organic radical with the proviso that $R_4$ is substituted with one or more polar groups;
$R_6$ is an organic radical or hydrogen; and
r is 0 or an integer of from 1 to 8, with the proviso that at least one r is not 0.

**9.** A method according to Claim 8 said dopants are acids or acid derivatives of the formula:

$$R_4(PO_2(R_6)M)_g(PO_3M_2)_f(SO_3M)_c(CO_2M)_d(PO_2M)_t(SO_2M)_h(PO(R_6)M)_i$$

or

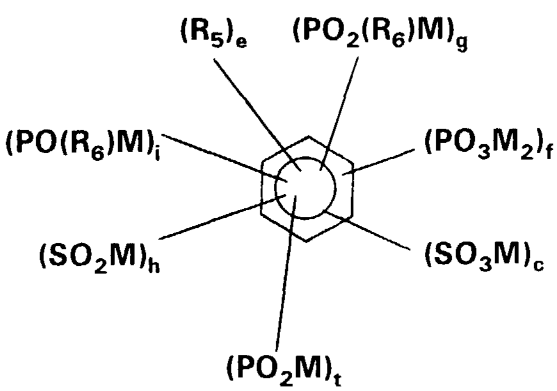

wherein:

M is H$^+$, or other metal or non-metal cation with the proviso that at least one of M is H$^+$ or a moiety which can be thermally or chemically transformed into a proton under use conditions;
t is 0, 1, 2, 3 or 4;
h is 0, 1, 2, 3 or 4;

i is 0, 1, 2, 3 or 4;
c is 0, 1, 2, 3 or 4;
d is 0, 1, 2, 3 or 4;
f is 0, 1, 2, 3 or 4;
g is 0, 1, 2, 3 or 4, with the proviso that at least one of c, d, f, g, h, i or t is other than 0;
e is 0, 1 or 2;
$R_4$ is a polar group selected from the group consisting of aryl, alkythio, alkoxycarbonyl, alkylcarbonyl, carbonyl, alkylcarbonylalkyl, alkylsulfinylalkyl, hydroxy, alkylsulfonylalkyl, alkylaminoalkyl, alkylamino, dialkylamino, alkylarylamino, (alkyl)arylamino, halo, di(alkyl)arylamino, alkylthioalkyl, amino, alkylarylamino, alkoxy, alkylaryl, aryloxy, alkylsulfinyl, alkylsulfonyl, dialkylaminoalkyl, aryloxyalkyl, aryloxyalkoxy, alkoxyaryl, alkylaryloxy or alkoxyaryloxy or is alkyl or arylalkyl substituted with one or more of said polar groups or one or more sulfinic acid or a salt or ester thereof, sulfinic acid or a salt or ester thereof, phosphonic acid or a salt or ester thereof, phosphinic acid or a salt or ester thereof, phosphoric acid or a salt or ester thereof, carboxylic acid or a salt or ester thereof, or boric acid or a salt or ester thereof;
$R_5$ is the same or different at each occurrence and is a polar group selected from the group consisting of cyano, nitro, hydroxy, halo, amino, carbonyl or substituted or unsubstituted alkoxycarbonyl, alkylcarbonyl, alkylcarbonylalkyl, alkylsulfinylalkyl, alkylsulfonylalkyl, alkylaminoalkyl, alkylamino, dialkylamino, aryloxy, alkylarylamino, (alkyl)arylamino, di(alkyl)arylamino, alkylaryl, alkylthioalkyl, alkylarylamino, alkoxy, alkoxyalkyl, alkylaryl, aryloxy, alkylsulfinyl, alkylthio, alkylsulfonyl, dialkylaminoalkyl, aryloxyalkyl, aryloxyalkoxy, alkoxyaryl, alkylaryloxy or alkoxyaryloxy or substituted alkyl, wherein permissible substituents are one or more sulfinic acid or a salt or ester thereof, sulfonic acid or a salt or ester thereof, phosphonic acid or a salt or ester thereof, phosphinic acid or a salt or ester thereof, phosphoric acid or a salt or ester thereof, carboxylic acid or a salt or ester thereof, or boric acid or a salt or ester thereof, or any two or more $R_5$ substituents together may form an alkylene or alkenylene chain completing a ring system such as a fused or spiro ring system which may include one or more cyclic rings, which chain is substituted with one or more of said polar groups, sulfonic acid or a salt or ester thereof, sulfinic acid or a salt or ester thereof, phosphonic acid or a salt or ester thereof, phosphinic acid or a salt or ester thereof, phosphoric acid or a salt or ester thereof, carboxylic acid or a salt or ester thereof, or boric acid or a salt or ester thereof, or $R_5$ is a moiety of the formula:

$$-(OCH_2CH_2)_qOCH_3 \text{ or } -(OCH_2CH(CH_3))_qOCH_3$$

wherein:
q is a positive whole number from 6 to about 12 or alkyl substituted with said moiety; and
$R_5$ is hydrogen, alkyl, aryl, alkylaryl, aryloxy, arylalkoxy, alkylsulfinyl, alkylthio, alkylsulfonyl or alkoxy.

**10.** A method according to claim 8 wherein said polar group is also hydrogen bonding.

**11.** A method according to claim 8 wherein said dopants are acids and/or acid derivatives of the formula:

$$R_4(PO_2M)_t(SO_3M)_c(PO_3)_f$$

or

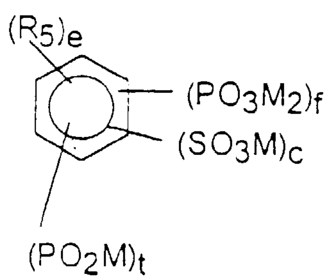

wherein:

c, f and t are the same or different and are 0, 1 or 2, with the proviso that at least one of c, f and t is not 0;
e is 1 or 2;
$R_4$ is alkvl or phenylalkyl substituted with one or more phenoxy, halo, alkoxyphenoxy, alkylphenoxy, carbonyl, hydroxy, carboxylic acid or a salt thereof, alkoxy or phenoxy substituted with one or more sulfonic acid or a salt thereof or carboxylic acid or a salt thereof;
$R_5$ is the same or different at each occurrence and is a polar group group selected from the group consisting of hydroxy, halo, carbonyl, carboxylic acid or a salt thereof, or carbonyl, or substituted or unsubstituted alkoxyalkyl, alkoxyphenoxy, alkylphenoxy, alkoxy, phenylalkoxy, or phenoxy, or substituted alkyl wherein permissible substituents are one or more sulfonic acid or a salt thereof or carboxylic acid or a salt thereof; or two or more $R_5$ groups together may form a divalent alkenylene chain completing a naphthalene ring substituted with one or more of said polar groups, sulfonic acid or a salt thereof, phosphonic acid or a salt thereof, phosphinic acid or a salt thereof or sulfinic acid or a salt thereof; and
M is $H^+$ or other metal or non-metal cation, with the proviso that at least one of M is $H^+$ or is a moiety which can be thermally transformed into a proton under use or process conditions.

**12.** A method according to claim 11 wherein said dopants are acids or acid derivatives of the formula:

$$R_4(SO_3M)_c$$

or

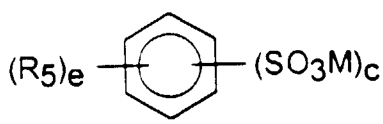

wherein:

c is 1, 2 or 3;
e is 1 or 2;
$R_4$ is alkyl substituted with one or more polar groups selected from the group consisting of halo, phenoxy, phenoxy substituted with one or more sulfonic acid or a salt thereof or carboxylic acid or a salt thereof, hydroxy, carbonyl, carboxylic acid or a salt thereof or fluoro groups;
$R_5$ is the same or different at each occurrence and is a polar groups selected from the group consisting of phenoxy, phenoxy substituted with one or more sulfonic acid or a salt thereof or carboxylic acid or a salt thereof, hydroxy, carbonyl, carboxylic acid or a salt thereof, or two or more $R_5$ groups together may form a divalent alkenylene chain completing a naphthalene ring substituted with one or more of said polar groups, sulfonic acid or a salt thereof, sulfinic acid or a salt thereof, phosphonic acid or a salt thereof or phosphinic acid or a salt thereof; and
M is $H^+$ or other metal or non-metal cation or a moiety which can be thermally tranformed into a proton under process conditions.

**13.** A method according to claim 12 wherein $R_5$ is a polar and hydrogen bonding group selected from the group consisting of hydroxy, carboxylic acid or a salt thereof or carbonyl; or two or more $R_5$ groups together may form a divalent alkenylene chain completing a naphthalene ring which is substituted with one or more of the aforementioned polar groups or sulfonic acid or a salt thereof.

**14.** A method according to claim 11 wherein said dopant is selected from group consisting of 4-hydroxybenzene sulfonic acid, 1-naphthol 3,6-disulfonic acid, 2,5-dihydroxybenzene 1,4-disulfonic acid, 3,6-dihydroxy naphthalene 2,7-disulfonic acid, 6-amino-4-hydroxy naphthalene sulfonic acid, 3-hydroxybenzene sulfonic acid, 3-diphenyl ether disulfonic acid, perfluoro butane sulfonic acid, sulfosalicylic acid, 1,5-naphthalene disulfonic acid, 2,6-naphthalene disulfonic acid, diphenyl ester-4,4'-disulfonic acid, diphenyl sulfonyl-4,4'-disulfonic acid, 1,3,6-naphthalene trisulfonic acid and 2,5-dihydroxy-1,4-benzene disulfonic acid.

## Patentansprüche

1. Verfahren zur Herstellung eines elektrisch leitfähigen Kationenkomplexes von substituierten oder unsubstituierten, konjugierten Homopolymeren oder Copolymeren durch Kontaktieren substituierter oder unsubstituierter, positiv geladener, konjugierter Homopolymer- oder Copolymer-Kationen mit negativ geladenen Dotiermittelanionen, dadurch gekennzeichnet, daß die Dotiermittelanionen mindestens eine anionische Funktionalität und mindestens eine Wasserstoffbrückenbindungen bildende Gruppe aufweisen.

2. Verfahren nach Anspruch 1, dadurch gekennzeichnet, daß die anionische Funktionalität und die Wasserstoffbrükkenbindungen bildende Gruppe in der Weise in dem Dotiermittelmolekül angeordnet sind, daß sie sich nicht miteinander verbinden können.

3. Verfahren nach Anspruch 1, wobei das konjugierte Homopolymer oder Copolymer ein substituiertes oder unsubstituiertes Polyanilin ist, welches wiederkehrende Einheiten der Formeln II, III oder II und III aufweist:

FORMEL II

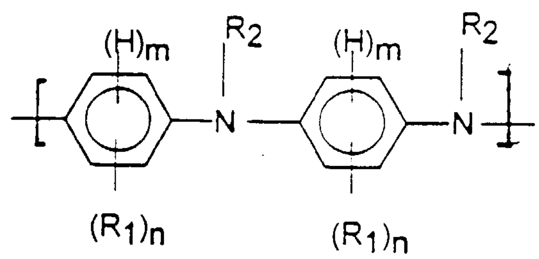

FORMEL III

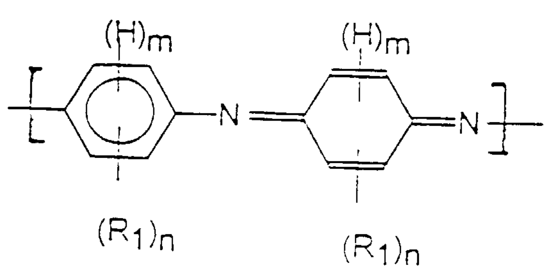

oder eine Kombination hiervon,
worin bedeuten:

n und m, die bei jedem Vorkommen gleich oder verschieden sind, ganze Zahlen von 0 bis 4, mit der Maßgabe, daß die Summe aus n und m 4 ist;

$R_1$ Phosphinsäure oder ein Salz oder Ester hiervon, Phosphonsäure oder ein Salz oder Ester hiervon. Sulfonsäure oder ein Salz oder Ester hiervon, Borsäure oder ein Salz oder Ester hievon, Phosphorsäure, Alkylamino, Dialkylamino, Arylamino, Diarylamino, Alkylarylamino, Amino, Hydroxy, Nitro, Carbonsäure oder Salz oder Ester hiervon. Halogen, Cyano, Deuterium oder substituiertes oder unsubstituiertes Alkyl, Alkenyl, Alkoxy, Cycloalkyl, Cycloalkenyl, Alkanoyl, Alkylthio, Alkinyl, Dialkylamino, Arylamino, Diarylamino, Alkylarylamino, Aryloxy, Hydroxy, Alkylthioalkyl, Alkylaryl, Arylalkyl, Aryloxy, Amino, Alkylthioalkyl, Alkylaryl, Arylalkyl, Alkylsulfinyl, Alkoxyalkyl, Alkylsulfonyl, Aryl, Arylthio, Arylsulfinyl, Alkoxycarbonyl, Alkylsilan oder Arylsulfonyl, wobei zulässige Substituenten eines oder mehrere sind aus Amino, Alklyamino, Dialkylamino, Arylamino, Diarylamino, Phosphinsäure oder ein Salz oder Ester hiervon, Alkylarylamino, Phosphonsäure oder Salz oder Ester hiervon, Sulfonsäure oder ein Salz oder Ester hiervon, Borsäure oder ein Salz oder Ester hiervon. Phosphorsäure oder ein Salz oder Ester hiervon, Carbonsäure oder ein Salz oder Ester hiervon, Halogen, Nitro, Hydroxy, Cyano oder Epoxy-Gruppen; oder beliebige zwei $R_1$-Substituenten oder irgendein $R_1$-Substituent und $R_2$-Substituent können zusammengenommen eine substituierte oder unsubstituierte Alkylen-, Alkinylen- oder Alkenylenkette bilden, welche einen 3-, 4-, 5-, 6-, 7-, 8-, 9- oder 10-gliedrigen aromatischen, heteroalicyclischen, heteroaromatischen oder alicyclischen Kohlenstoffring vervollständigen, welcher Ring wahlweise ein oder mehrere zweiwertige Ester, Carbonyl, Stickstoff, Schwefel, Sulfinyl, Sulfonyl oder Sauerstoff beinhalten kann, wobei zulässige Substituenten eines oder mehrere sind aus Amino, Alkylamino, Phosphinsäure oder ein Salz oder Ester hiervon, Dialkylamino, Arylamino, Diarylamino, Alkylarylamino, Phosphonsäure oder Salz oder Ester hiervon, Sulfonsäure oder ein Salz oder Ester hiervon, Borsäure oder ein Salz oder Ester hiervon, Phosphorsäure oder ein Salz oder Ester hiervon, Carbonsäure oder ein Salz oder Ester hiervon, Halogen, Nitro, Hydroxy, Cyano oder Epoxy-Gruppen, oder $R_1$ ist eine aliphatische Gruppe mit wiederkehrenden Einheiten der Formel:

$$(OCH_2CH_2)_qO\text{-}CH_3,\ (OCH_2CH(CH_3))_qO\text{-}CH_3,$$

$$(CH_2)_qCF_3,\ (CF_2)_qCF_3 \text{ oder } (CH_2)_qCH_3$$

worin q eine positive ganze Zahl ist; und
$R_2$, das bei jedem Vorkommen gleich oder verschieden ist, $R_1$-Substituenten oder Wasserstoff.

4. Verfahren nach Anspruch 3, wobei das Homopolymer oder Copolymer die Formel IV umfaßt:

FORMEL IV

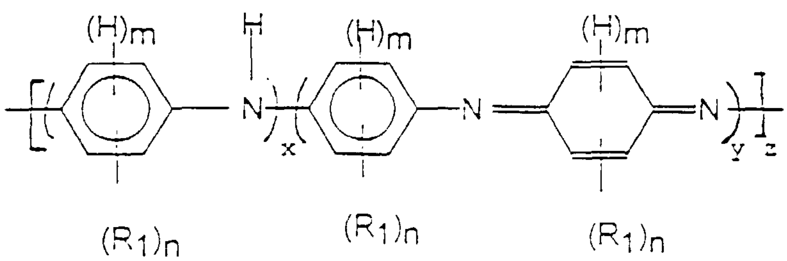

worin bedeuten:

x und y, die bei jedem Vorkommen gleich oder verschieden sind, ganze Zahlen von gleich oder größer als 0, mit der Maßgabe, daß die Summe aus x und y größer als 0 ist;
z eine ganze Zahl von gleich oder größer als etwa 1;
n eine ganze Zahl von 0 bis 4;
m eine ganze Zahl von 0 bis 4, mit der Maßgabe, daß die Summe aus n und m 4 ist;
$R_1$, das bei jedem Vorkommen gleich oder verschieden ist, Alkyl, Alkenyl, Alkoxy, Cycloalkyl, Cycloalkenyl, Alkanoyl, Amino, Alkylamino, Dialkylamino, Arylamino, Diarylamino, Alkylarylamino, Alkylthio, Aryloxy, Alkylthioalkyl, Alkylaryl, Arylalkyl, Alkylsulfinyl, Alkoxyalkyl, Alkylsulfonyl, Aryl, Arylthio, Arylsulfinyl, Alkoxycarbonyl, Phosphinsäure oder ein Salz oder Ester hiervon, Phosphonsäure oder Salz oder Ester hiervon, Alkylsilyl, Borsäure oder ein Salz oder Ester hiervon, Arylsulfonyl, Carbonsäure oder ein Salz oder Ester hiervon, Halogen, Hydroxy, Nitro, Cyano, Sulfonsäure oder ein Salz oder Ester hiervon, Phosphorsäure oder ein Salz oder Ester hiervon, oder Aryl. Alkyl oder Alkoxy, substituiert mit einem oder mehreren aus Carbonsäure oder ein Salz oder Ester hiervon, Phosphorsäure oder ein Salz oder Ester hiervon, Borsäure oder ein Salz oder Ester hiervon, Sulfonsäure oder ein Salz oder Ester hiervon, Halogen, Nitro, Cyano Epoxy. Hydroxy, Phosphinsäure oder Salz oder Ester hiervon oder Phosphonsäure oder ein Salz oder Ester hiervon: oder beliebige zwei $R_1$-Gruppen oder irgendeine $R_1$-Gruppe und $R_2$-Gruppe können zusammen eine substituierte oder unsubstituierte Alkylen-, oder Alkenylenkette bilden, welche einen 3-, 4-, 5-, 6-, 7-. 8-, 9- oder 10-gliedrigen heteroaromatischen, heteroalicyclischen, aromatischen oder alicyclischen Kohlenstoffring vervollständigen, welche Kette wahlweise ein oder mehrere zweiwertige Stickstoff-, Ester-, Carbonyl-, Schwefel-, Sulfinyl-, Sulfonyl- oder SauersToffgruppen beinhalten kann, wobei zulässige Substituenten eines oder mehrere aus Sulfonsäure oder ein Salz oder Ester hiervon, Carbonsäure oder ein Salz oder Ester hiervon, Phosphorsäure oder ein Salz oder Ester hiervon. Borsäure oder ein Salz oder Ester hiervon, Halogen, Nitro. Cyano. Epoxy, Hydroxy, Phosphinsäure oder Salz oder Ester hiervon, oder Phosphonsäure oder Salz oder Ester hiervon, sind.

**5.** Verfahren nach Anspruch 4, wobei bedeuten:

$R_2$ Wasserstoff:
m 3 oder 4 und n 0 oder 1;
$R_1$, das bei jedem Vorkommen gleich oder verschieden ist. Alkyl oder Alkoxy mit 1 bis 12 Kohlenstoffatomen oder eine Protonsäurefunktion oder ein Salz hiervon;
x eine ganze Zahl von gleich oder größer als 1;
y eine ganze Zahl von gleich oder größer als 0; und
z eine ganze Zahl von gleich oder größer als 5.

**6.** Verfahren nach Anspruch 5, wobei m 4 ist und n 0 ist.

**7.** Verfahren nach Anspruch 1, wobei das Dotiermittelanion durch eine polare Gruppe oder polare Gruppen mit einem molaren Nettobeitrag der polaren Gruppe von mehr als 200 $J^{1/2}cm^2mol^{-1}$ substituiert ist.

**8.** Verfahren nach Anspruch 7, wobei die Dotiermittelanionen organische Spezies der Formeln:

$$R_4(PO_3^{=})_r(PO_2^{=})_r(SO_2^{-})_r(PO_2(R_6)^{-})_r(SO_3^{-})_r(CO_2^{-})_r(PO(R_6)^{-})_r(BO_2^{=})_r$$

$$(PO_3^{=})_r(PO_2^{=})_r(BO_2^{=})_r$$

sind, worin bedeuten:

$R_4$ ein organischer Rest, mit der Maßgabe, daß $R_4$ mit einer oder mehreren polaren Gruppen substituiert ist:
$R_6$ ein organischer Rest oder Wasserstoff; und
r 0 oder eine ganze Zahl von 1 bis 8, mit der Maßgabe, daß mindestens ein r nicht 0 ist.

**9.** Verfahren nach Anspruch 8, wobei die Dotiermittel Säuren oder Säurederivate der Formel:

$$R_4(PO_2(R_6)M)_g(PO_3M_2)_f(SO_3M)_c(CO_2M)_d(PO_2M)_t(SO_2M)_h(PO(R_6)M)_i$$

oder

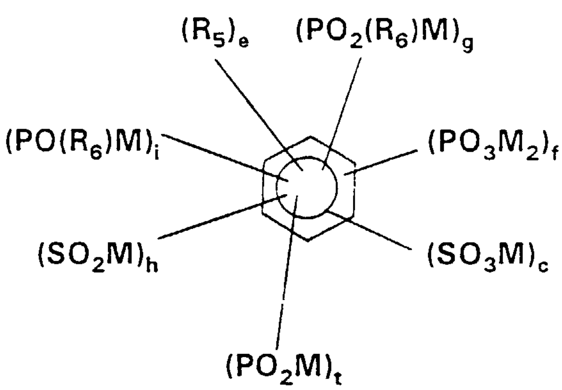

sind, worin bedeuten:

M $H^+$ oder ein anderes Metall- oder Nichtmetallkation, mit der Maßgabe, daß mindestens eines von M, $H^+$

oder ein Gruppe ist. welche thermisch oder chemisch unter Anwendungsbedingungen in ein Proton überführt werden kann;
t 0, 1, 2, 3 oder 4;
h 0, 1, 2. 3 oder 4;
i 0, 1, 2, 3 oder 4;
c 0, 1, 2, 3 oder 4;
d 0, 1, 2. 3 oder 4;
f 0, 1, 2, 3 oder 4;
g 0, 1, 2, 3 oder 4, mit der Maßgabe, daß mindestens eines von c, d, f, g, h, i oder t von 0 verschieden ist;
e 0, 1 oder 2;
$R_4$ eine polare Gruppe, gewählt aus der Gruppe, bestehend aus Aryl, Alkylthio, Alkoxycarbonyl. Alkylcarbonyl. Carbonyl, Alkylcarbonylalkyl. Alkylsulfinylalkyl. Hydroxy. Alkylsulfonylalkyl. Alkylaminoalkyl, Alkylamino, Dialkylamino, Alkylarylamino, (Alkyl)arylamino. Halogen, Di(alkyl)arylamino, Alkylthioalkyl, Amino, Alkylarylamino, Alkoxy, Alkylaryl, Aryloxy. Alkylsulfinyl. Alkylsulfonyl, Dialkylaminoalkyl, Aryloxyalkyl, Aryloxyalkoxy. Alkoxyaryl. Alkylaryloxy oder Alkoxyaryloxy, oderAlkyl oder Arylalkyl, substituiert mit einer oder mehreren der polaren Gruppen oder einem oder mehreren aus Sulfinsäure oder Salz oder Ester hiervon, Sulfinsäure oder Salz oder Ester hiervon. Phosphonsäure oder Salz oder Ester hiervon. Phosphinsäure oder Salz oder Ester hiervon. Phosphorsäure oder Salz oder Ester hiervon. Carbonsäure oder Salz oder Ester hiervon, oder Borsäure oder Salz oder Ester hiervon;
$R_5$, das bei jedem Vorkommen gleich oder verschieden ist, eine polare Gruppe, gewählt aus der Gruppe, bestehend aus Cyano, Nitro, Hydroxy, Halogen. Amino. Carbonyl oder substituiertes oder unsubstituiertes Alkoxycarbonyl. Alkylcarbonyl. Alkylcarbonylalkyl, Alkylsulfinylalkyl, Alkylsulfonylalkyl, Alkylaminoalkyl, Alkylamino, Dialkylamino. Aryloxy, Alkylarylamino, (Alkyl)arylamino, Di(alkyl)arylamino, Alkylaryl. Alkylthioalkyl, Alkylarylamino, Alkoxy. Alkoxyalkyl, Alkylaryl, Aryloxy, Alkylsulfinyl, Alkylthio, Alkylsulfonyl. Dialkylaminoalkyl. Aryloxyalkyl. Aryloxyalkoxy, Alkoxyaryl. Alkylaryloxy oder Alkoxyaryloxy oder substituiertes Alkyl, wobei zulässige Substituenten eines oder mehrere aus Sulfinsäure oder ein Salz oder Ester hiervon, Sulfonsäure oder ein Salz oder Ester hiervon, Phosphonsäure oder ein Salz oder Ester hiervon, Phosphinsäure oder ein Salz oder Ester hiervon. Phosphorsäure oder ein Salz oder Ester hiervon, Carbonsäure oder ein Salz oder Ester hiervon, oder Borsäure oder ein Salz oder Ester hiervon sind, oder beliebige zwei oder mehrere $R_5$-Substituenten können zusammen eine Alkylen- oder Alkenylenkette bilden, welche ein Ringsystem vervollständigt, wie ein kondensiertes oder Spiro-Ringsystem, welches einen oder mehrere cyclische Ringe beinhalten kann, welche Kette substituiert ist mit einer oder mehreren der polaren Gruppen, Sulfonsäure oder Salz oder Ester hiervon, Sulfinsäure oder Salz oder Ester hiervon, Phosphonsäure oder Salz oder Ester hiervon, Phosphinsäure oder Salz oder Ester hiervon. Phosphorsäure oder Salz oder Ester hiervon, Carbonsäure oder Salz oder Ester hiervon, oder Borsäure oder Salz oder Ester hiervon, oder $R_5$ ist eine Gruppe der Formel:

$$-(OCH_2CH_2)_qOCH_3 \text{ oder } -(OCH_2CH(CH_3))_qOCH_3$$

worin bedeuten:
q eine positive ganze Zahl von 6 bls etwa 12 oder mit dieser Gruppe substituiertes Alkyl; und
$R_6$ Wasserstoff, Alkyl. Aryl, Alkylaryl, Aryloxy, Arylalkoxy, Alkylsulfinyl, Alkylthio, Alkylsulfonyl oder Alkoxy.

**10.** Verfahren nach Anspruch 8, wobei die polare Gruppe ebenso Wasserstoffbrückenbindungen bildend ist.

**11.** Verfahren nach Anspruch 8, wobei die Dotiermittel Säuren und/oder Säurederivate der Formel:

$$R_4(PO_2M)_t(SO_3M)_c(PO_3)_f$$

oder

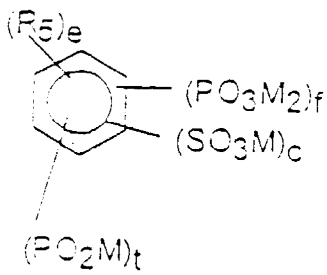

sind, worin bedeuten:

c, f und t, welche gleich oder verschieden sind. 0, 1 oder 2, mit der Maßgabe, daß mindestens eines von c, f und t nicht 0 ist;
e 1 oder 2;
$R_4$ Alkyl oder Phenylalkyl, substituiert mit einem oder mehreren aus Phenoxy, Halogen, Alkoxyphenoxy, Alkylphenoxy, Carbonyl. Hydroxy, Carbonsäure oder Salz hiervon, Alkoxy oder Phenoxy, substituiert mit einem oder mehreren aus Sulfonsäure oder Salz hiervon, oder Carbonsäure oder Salz hiervon;
$R_5$, das bei jedem Vorkommen gleich oder verschieden ist, eine polare Gruppe, gewählt aus der Gruppe, bestehend aus Hydroxy, Halogen, Carbonyl, Carbonsäure oder ein Salz hiervon oder Carbonyl oder substituiertes oder unsubstituiertes Alkoxyalkyl. Alkoxyphenoxy, Alkylphenoxy, Alkoxy, Phenylalkoxy oder Phenoxy, oder substituiertes Alkyl. wobei zulässige Substituenten ein oder mehrere sind aus Sulfonsäure oder ein Salz hiervon oder Carbonsäure oder ein Salz hiervon sind; oder zwei oder mehrere $R_5$-Gruppen können zusammen eine zweiwertige Alkenylenkette bilden, die einen Naphthalinring vervollständigt, substituiert mit einer oder mehreren der polaren Gruppen, Sulfonsäure oder Salz hiervon, Phosphonsäure oder Salz hiervon, Phosphinsäure oder Salz hiervon oder Sulfinsäure oder Salz hiervon; und
M $H^+$ oder ein anderes Metall- oder Nichtmetallkation, mit der Maßgabe, daß mindestens eines von M $H^+$ oder eine Gruppe ist. welche thermisch unter Anwendungs- oder Prozeßbedingungen in ein Proton überführt werden kann.

**12.** Verfahren nach Anspruch 11, wobei die Dotiermittel Säuren oder Säurederivate der Formel:

$$R_4(SO_3M)_c$$

oder

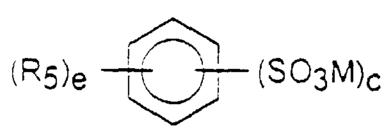

sind, worin bedeuten:

c 1, 2 oder 3;
e 1 oder 2;
$R_4$ Alkyl, substituiert mit einer oder mehreren polaren Gruppen, gewählt aus der Gruppe, bestehend aus Halogen, Phenoxy, Phenoxy, substituiert mit einem oder mehreren aus Sulfonsäure oder Salz hiervon oder Carbonsäure oder Salz hiervon, Hydroxy. Carbonyl. Carbonsäure oder ein Salz hiervon oder Fluorogruppen;
$R_5$, das bei jedem Vorkommen gleich oder verschieden ist, eine polare Gruppe, gewählt aus der Gruppe, bestehend aus Phenoxy, Phenoxy, substituiert mit einem oder mehreren aus Sulfonsäure oder Salz hiervon oder Carbonsäure oder Salz hiervon, Hydroxy, Carbonyl. Carbonsäure oder Salz hiervon, oder zwei oder mehrere $R_5$-Gruppen können zusammen eine zweiwertige Alkenylenkette bilden, die einen Naphthalinring vervollständigt, substituiert mit einer oder mehreren der polaren Gruppen. Sulfonsäure oder Salz hiervon. Sulfinsäure oder Salz hiervon. Phosphonsäure oder Salz hiervon oder Phosphinsäure oder Salz hiervon; und

M $H^+$ oder ein anderes Metall- oder Nichtmetallkation oder eine Gruppe, die thermisch unter Prozeßbedingungen in ein Proton überführt werden kann.

**13.** Verfahren nach Anspruch 12, wobei $R_5$ eine polare und Wasserstoffbrückenbindungen bildende Gruppe ist, gewählt aus der Gruppe, bestehend aus Hydroxy, Carbonsäure oder ein Salz hiervon oder Carbonyl; oder zwei oder mehrere $R_5$-Gruppen bilden zusammen eine zweiwertige Alkylenkette, die einen Naphthalinring vervollständigt, der substituiert ist mit einer oder mehreren der vorgenannten polaren Gruppen oder Sulfonsäure oder Salz hiervon.

**14.** Verfahren nach Anspruch 11, wobei das Dotiermittel gewählt ist aus der Gruppe, bestehend aus 4-Hydroxybenzolsulfonsäure, 1-Naphthol-3,6-disulfonsäure, 2,5-Dihydroxybenzol-1,4-disulfonsäure, 3,6-Dihydroxynaphthalin-2,7-disulfonsäure, 6-Amino-4-hydroxynaphthalinsulfonsäure. 3-Hydroxybenzolsulfonsäure, 3-Diphenyletherdisulfonsäure. Perfluorbutansulfonsäure, Sulfosalicylsäure, 1,5-Naphthalindisulfonsäure, 2,6-Naphthalindisulfonsäure. Diphenylester-4.4'-disulfonsäure. Diphenylsulfonyl-4,4'-disulfonsäure, 1,3,6-Naphthalintrisulfonsäure und 2,5-Dihydroxy-1,4-benzoldisulfonsäure.

## Revendications

**1.** Procédé de préparation d'un complexe de cation d'homopolymère ou de copolymère conjugué, substitué ou non substitué, électriquement conducteur, par mise en contact de cations d'homopolymère ou de copolymère conjugué, substitué ou non substitué, positivement chargés, avec des anions dopants négativement chargés, caractérisé en ce que lesdits anions dopants possèdent au moins un groupe fonctionnel anionique et au moins un groupe se liant à l'hydrogène.

**2.** Procédé selon la revendication 1, caractérisé en ce que le groupe fonctionnel anionique et le groupe se liant à l'hydrogène sont placés dans la molécule dopante de telle manière qu'ils ne peuvent pas se lier l'un à l'autre.

**3.** Procédé selon la revendication 1, dans lequel ledit homopolymère ou copolymère conjugué est une polyaniline substituée ou non substituée, renfermant des motifs de formule II, de formule III ou de formules II et III:

Formule II

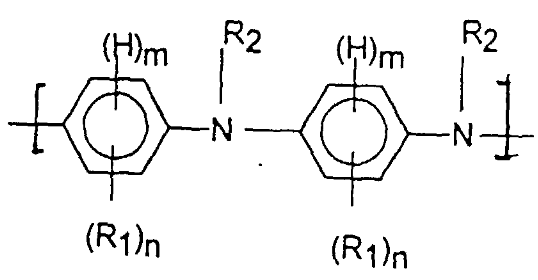

Formule III

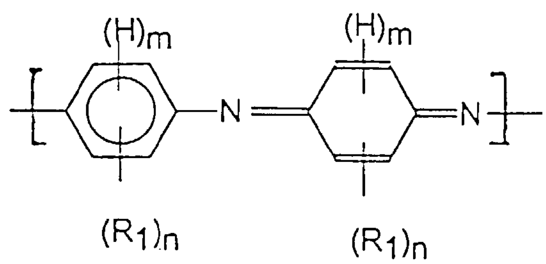

ou une combinaison de tels motifs,

formules dans lesquelles n et m sont identiques ou différents à chaque occurrence et représentent des nombres entiers ayant une valeur de 0 à 4, étant entendu que la somme de n et de m est égale à 4, $R_1$ représente un groupe acide phosphinique ou sel ou ester d'acide phosphinique, acide phosphonique ou sel ou ester d'acide phosphonique, acide sulfonique ou sel ou ester d'acide sulfonique, acide borique ou sel ou ester d'acide borique, acide phosphorique, alkylamino, dialkylamino, arylamino, diarylamino, alkylarylamino, amino, hydroxy, nitro, acide carboxylique ou sel ou ester d'acide carboxylique, halogéno, cyano, deutérium, ou un groupe, substitué ou non substitué, alkyle, alcényle, alcoxy, cycloalkyle, cycloalcényle, alcanoyle, alkylthio, alcynyle, dialkylamino, arylamino, diarylamino, alkylarylamino, aryloxy, hydroxy, alkylthioalkyle, alkylaryle, arylalkyle, aryloxy, amino, alkylthioalkyle, alkylaryle, arylalkyle, alkylsulfényle, alcoxyalkyle, alkylsulfonyle, aryle, arylthio, arylsulfinyle, alcoxycarbonyle, alkylsilyle ou arylsulfonyle, les substituants possibles desdits groupes étant un ou plusieurs fragments amino, alkylamino, dialkylamino, arylamino, diarylamino, acide phosphinique ou sel ou ester d'acide phosphinique, alkylarylamino, acide phosphonique ou sel ou ester d'acide phosphonique, acide sulfonique ou sel ou ester d'acide sulfonique, acide borique ou sel ou ester d'acide borique, acide phosphorique ou sel ou ester d'acide phosphorique, acide carboxylique ou sel ou ester d'acide carboxylique, halogéno, nitro, hydroxy, cyano ou époxy, ou bien deux substituants $R_1$ quelconques ou un substituant $R_1$ quelconque et un substituant $R_2$ quelconque peuvent former ensemble une chaîne alkylène, alcynylène ou alcénylène, substituée ou non substituée, qui complète un noyau carboné aromatique, hétéroalicyclique, hétéroaromatique ou alicyclique, à 3, 4, 5, 6, 7, 8, 9 ou 10 chaînons, ledit noyau pouvant inclure éventuellement un ou plusieurs atomes d'azote de soufre ou d'oxygène ou groupes ester divalent, carbonyle, sulfinyle ou sulfonyle, et les substituants possibles de ladite chaîne étant un ou plusieurs fragments amino, alkylamino, acide phosphinique ou sel ou ester d'acide phosphinique, dialkylamino, arylamino, diarylamino, alkylarylamino, acide phosphonique ou sel ou ester d'acide phosphonique, acide sulfonique ou sel ou ester d'acide sulfonique, acide borique ou sel ou ester d'acide borique, acide phosphorique ou sel ou ester d'acide phosphorique, acide carboxylique ou sel ou ester d'acide carboxylique, halogéno, nitro, hydroxy, cyano ou époxy, ou bien $R_1$ représente un fragment aliphatique ayant des motifs de formule :

$$(OCH_2CH_2)_qO\text{-}CH_3,\ (OCH_2CH(CH_3))_qO\text{-}CH_3,\ (CH_2)_qCF_3,\ (CF_2)_qCF_3,$$

ou

$$(CH_2)_qCH_3,$$

dans lesquels q représente un nombre entier positif, et le substituant $R_2$ est identique ou différent à chaque occurrence et représente le substituant $R_1$ ou un atome d'hydrogène.

**4.** Procédé selon la revendication 3, dans lequel ledit homopolymère ou copolymère répond à la formule IV :

Formule IV

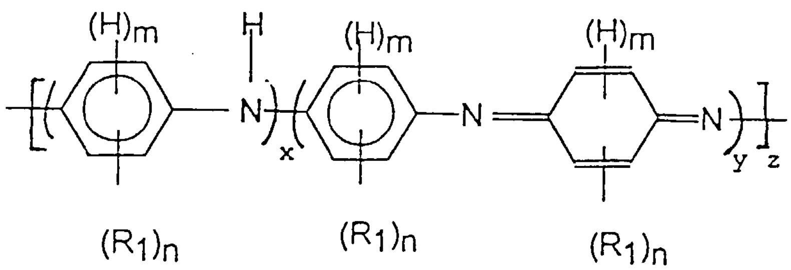

dans laquelle x et y sont identiques ou différents à chaque occurrence et représentent des nombres entiers supérieurs ou égaux à 0, étant entendu que la somme de x et de y est supérieure à 0,

z représente un nombre entier supérieur ou égal à environ 1,
n représente un nombre entier ayant une valeur de 0 à 4, et
m représente un nombre entier ayant une valeur de 0 à 4, étant entendu que la somme de n et de m est égale à 4,
$R_1$ est identique ou différent à chaque occurrence et représente un groupe alkyle, alcényle, alcoxy, cycloalkyle, cycloalcényle, alcanoyle, amino, alkylamino, dialkylamino, arylamino, diarylamino, alkylarylamino, alkylthio, aryloxy, alkylthioalkyle, alkylaryle, arylalkyle, alkylsulfinyle, alcoxyalkyle, alkylsulfonyle, aryle, arylthio, arylsulfinyle, alcoxycarbonyle, acide phosphinique ou sel ou ester d'acide phosphinique, acide phosphonique ou sel ou ester d'acide phosphonique, alkylsilyle, acide borique ou sel ou ester d'acide borique, arylsylfonyle, acide carboxylique ou sel ou ester d'acide carboxylique, halogéno, hydroxy, nitro, cyano, acide sulfonique ou sel ou ester d'acide sulfonique, ou acide phosphorique ou sel ou ester d'acide phosphorique, ou un groupe aryle, alkyle ou alcoxy, substitué par un ou plusieurs substituants acide carboxylique ou sel ou ester d'acide carboxylique, acide phosphorique ou sel ou ester d'acide phosphorique, acide borique ou sel ou ester d'acide borique, acide sulfonique ou sel ou ester d'acide sulfonique, halogéno, nitro, cyano, époxy, hydroxy, acide phosphinique ou sel ou ester d'acide phosphinique,ou acide phosphonique ou sel ou ester d'acide phosphonique, ou bien deux groupes $R_1$ quelconques ou un groupe $R_1$ quelconque et un groupe $R_2$ quelconque peuvent former ensemble une chaîne alkylène ou alcénylène, substituée ou non substituée, qui complète un noyau carboné hétéroaromatique, hétéroalicyclique, aromatique ou alicyclique, à 3, 4, 5, 6, 7, 8, 9 ou 10 chaînons, ladite chaîne pouvant inclure éventuellement un ou plusieurs groupes divalents azote, ester, carbonyle, soufre, sulfinyle , sulfonyle ou oxygène et les substituants possibles de ladite chaîne étant un ou plusieurs substituants acide sulfonique ou sel ou ester d'acide sulfonique, acide carboxylique ou sel ou ester d'acide carboxylique, acide phosphorique ou sel ou ester d'acide phosphorique, acide borique ou sel ou ester d'acide borique, halogéno, nitro, cyano, époxy, hydroxy, acide phosphinique ou sel ou ester d'acide phosphinique,ou acide phosphonique ou sel ou ester d'acide phosphonique.

**5.** Procédé selon la revendication 4, dans lequel $R_2$ représente un atome d'hydrogène, m est égal à 3 ou 4 et n est égal à 0 ou 1, $R_1$ est identique ou différent à chaque occurrence et représente un groupe alkyle ou alcoxy ayant 1 à 12 atomes de carbone ou un groupe fonctionnel acide protonique ou sel d'acide protonique, x représente un nombre entier supérieur ou égal à 1, y est supérieur ou égal à 0 et z représente un nombre entier supérieur ou égal à 5.

**6.** Procédé selon la revendication 5, dans lequel m est égal à 4 et n est égal à 0.

**7.** Procédé selon la revendication 1, dans lequel ledit anion dopant est substitué par un groupe polaire ou des groupes polaires présentant une contribution molaire nette de groupe polaire supérieure à $200J^{1/2}.cm^{2}.mol^{-1}$.

**8.** Procédé selon la revendication 7, dans lequel lesdits anions dopants sont des espèces organiques de formule :

$$R_4(PO_3^{=})_r(PO_2^{=})_r(SO_2^{-})_r(PO_2(R_6)^{-})_r(SO_3^{-})_r(CO_2^{-})_r$$

$$(PO(R_6)^{-})_r(BO_2^{=})_r$$

dans laquelle $R_4$ représente un radical organique, étant entendu que $R_4$ est substitué par un ou plusieurs groupes polaires, $R_6$ représente un radical organique ou un atome d'hydrogène, et r est égal à 0 ou représente un nombre entier ayant une valeur de 1 à 8, étant entendu qu'au moins un r n'est pas égal à 0.

**9.** Procédé selon la revendication 8, dans lequel les dopants sont des acides ou des dérivés d'acide de formule :

$$R_4(PO_2(R_6)M)_g(PO_3M_2)_f(SO_3M)_c(CO_2M)_d(PO_2M)_t(SO_2M)_h(PO(R_6)M)_i$$

ou

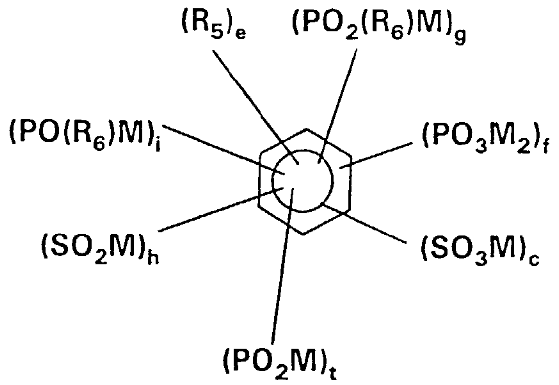

dans laquelle M représente $H^+$ ou un autre cation métallique ou non métallique, étant entendu qu'au moins l'un de M représente $H^+$ ou un fragment qui peut être transformé thermiquement ou chimiquement en un proton dans les conditions d'utilisation,

t est égal à 0, 1, 2, 3 ou 4,
h est égal à 0, 1, 2, 3 ou 4,
i est égal à 0, 1, 2, 3 ou 4,
c est égal à 0, 1, 2, 3 ou 4,
d est égal à 0, 1, 2, 3 ou 4,
f est égal à 0, 1, 2, 3 ou 4,
g est égal à 0, 1, 2, 3 ou 4, étant entendu qu'au moins l'un de c, d, f, g, h, i et t est différent de 0,
e est égal à 0, 1 ou 2,
$R_4$ représente un groupe polaire choisi parmi les groupes aryle, alkylthio, alcoxycarbonyle, alkylcarbonyle, carbonyle, alkylcarbonylalkyle, alkylsulfinylalkyle, hydroxy, alkylsulfonylalkyle, alkylaminoalkyle, alkylamino, dialkylamino, alkylarylamino, (alkyl)arylamino, halogéno, di(alkyl)arylamino, alkylthioalkyle, amino, alkylarylamino, alcoxy, alkylaryle, aryloxy, alkylsulfinyle, alkylsulfonyle, dialkylaminoalkyle, aryloxyalkyle, aryloxyalcoxy, alcoxyaryle, alkylaryloxy ou alcoxyaryloxy, ou représente un groupe alkyle ou arylalkyle, substitué par un ou plusieurs desdits groupes polaires ou par un ou plusieurs groupes acide sulfinique ou sel ou ester d'acide sulfinique, acide sulfonique ou sel ou ester d'acide sulfonique,acide phosphonique ou sel ou ester d'acide phosphonique, acide phosphinique ou sel ou ester d'acide phosphinique, acide phosphorique ou sel ou ester d'acide phosphorique, acide carboxylique ou sel ou ester d'acide carboxylique, ou acide borique ou sel ou ester d'acide borique,
$R_5$ est identique ou différent à chaque occurrence et représente un groupe polaire choisi parmi les groupes cyano, nitro, hydroxy, halogéno, amino, carbonyle et les groupes, subsitués ou non substitués, alcoxycarbonyle, alkylcarbonyle, alkylcarbonylalkyle, alkylsulfinylalkyle, alkylsulfonylalkyle, alkylaminoalkyle, alkylamino, dialkylamino, aryloxy, alkylarylamino, (alkyl)arylamino, di(alkyl)arylamino, alkylaryle, alkylthioalkyle, alkylarylamino, alcoxy, alcoxyalkyle, alkylaryle, aryloxy, alkylsulfinyle, alkylthio, alkylsulfonyle, dialkylaminoalkyle, aryloxyalkyle, aryloxyalcoxy, alcoxyaryle, alkylaryloxy et alcoxyaryloxy, et les groupes alkyle substitués, les substituants possibles étant un ou plusieurs substituants acide sulfinique ou sel ou ester d'acide sulfinique, acide sulfonique ou sel ou ester d'acide sulfonique,acide phosphonique ou sel ou ester d'acide phosphonique, acide phosphinique ou sel ou ester d'acide phosphinique, acide phosphorique ou sel ou ester d'acide phosphorique, acide carboxylique ou sel ou ester d'acide carboxylique, ou acide borique ou sel ou ester d'acide borique, ou bien deux ou plus de deux substituants $R_5$ quelconques peuvent former ensemble une chaîne alkylène ou alcénylène qui complète un système cyclique tel qu'un système à noyaux condensés ou un système à noyaux spiro, qui peut comporter un ou plusieurs noyaux cycliques, ladite chaîne étant substituée par un ou plusieurs desdits groupes polaires ou groupes acide sulfonique ou sel ou ester d'acide sulfonique, acide sulfinique ou sel ou ester d'acide sulfinique,acide phosphonique ou sel ou ester d'acide phosphonique, acide phosphinique ou sel ou ester d'acide phosphinique, acide phosphorique ou sel ou ester d'acide phosphorique, acide carboxylique ou sel ou ester d'acide carboxylique, ou acide borique ou sel ou ester d'acide borique, ou bien $R_5$ représente un fragment de formule :

$$-(OCH_2CH_2)_qOCH_3 \text{ ou } -(OCH_2CH(CH_3))_qOCH_3$$

dans laquelle q représente un nombre entier positif, ayant une valeur de 6 à environ 12, ou un groupe alkyle substitué par ledit fragment, et $R_6$ représente un atome d'hydrogène ou un groupe alkyle, aryle, alkylaryle, aryloxy, arylalcoxy, alkylsulfinyle, alkylthio, alkylsulfonyle ou alcoxy.

**10.** Procédé selon la revendication 8, dans lequel ledit groupe polaire est également un groupe se liant à l'hydrogène.

**11.** Procédé selon la revendication 8, dans lequel lesdits dopants sont des acides et/ou des dérivés d'acide de formule :

$$R_4(PO_2M)_t(SO_3M)_c(PO_3)_f$$

ou

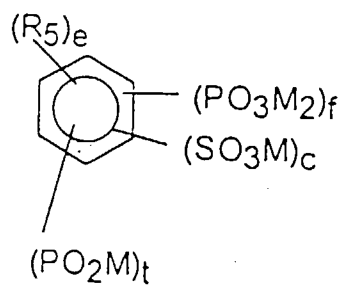

dans laquelle c, f et t sont identiques ou différents et sont égaux à 0, 1 ou 2, étant entendu qu'au moins l'un de c, f et t n'est pas égal à 0,

e est égal à 1 ou 2,

$R_4$ représente un groupe alkyle ou phénylalkyle, substitué par un ou plusieurs groupes phénoxy, halogéno, alcoxyphénoxy, alkylphénoxy, carbonyle, hydroxy, acide carboxylique ou sel d'acide carboxylique, alcoxy ou phénoxy substitué par un ou plusieurs groupes acide sulfonique ou sel d'acide sulfonique ou acide carboxylique ou sel d'acide carboxylique,

$R_5$ est identique ou différent à chaque occurrence et représente un groupe polaire choisi parmi les groupes hydroxy, halogéno, carbonyle, acide carboxylique ou sel d'acide carboxylique, les groupes, substitués ou non substitués, alcoxyalkyle, alcoxyphénoxy, alkylphénoxy, alcoxy, phénylalcoxy et phénoxy, et les groupes alkyle substitués, les substituants possibles étant un ou plusieurs substituants acide sulfonique ou sel d'acide sulfonique, ou acide carboxylique ou sel d'acide carboxylique, ou bien deux ou plus de deux groupes $R_5$ peuvent former ensemble une chaîne alcénylène divalente complétant un noyau naphtalénique substitué par un ou plusieurs desdits groupes polaires ou groupes acide sulfonique ou sel d'acide sulfonique, acide phosphonique

ou sel d'acide phosphonique, acide phosphinique ou sel d'acide phosphinique ou acide sulfinique ou sel d'acide sulfinique, et
M représente $H^+$ ou un autre cation métallique ou non métallique, étant entendu qu'au moins l'un de M représente $H^+$ ou un fragment qui peut être transformé thermiquement en un proton dans les conditions d'utilisation ou de traitement.

**12.** Procédé selon la revendication 11, dans lequel lesdits dopants sont des acides ou dérivés d'acide de formule :

$$R_4(SO_3M)_c$$

ou

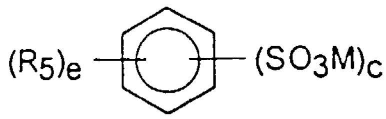

dans laquelle

c est égal à 1, 2 ou 3,
e est égal à 1 ou 2,
$R_4$ représente un groupe alkyle substitué par un ou plusieurs groupes polaires choisis parmi les groupes halogéno, phénoxy, phénoxy substitué par un ou plusieurs groupes acide sulfonique ou sel d'acide sulfonique ou acide carboxylique ou sel d'acide carboxylique, hydroxy, carbonyle, acide carboxylique ou sel d'acide carboxylique, et fluoro,
$R_5$ est identique ou différent à chaque occurrence et représente un groupe polaire choisi parmi les groupes phénoxy, phénoxy substitué par un ou plusieurs groupes acide sulfonique ou sel d'acide sulfonique ou acide carboxylique ou sel d'acide carboxylique, hydroxy, carbonyle, acide carboxylique ou sel d'acide carboxylique, ou bien deux ou plus de deux groupes $R_5$ peuvent former ensemble une chaîne alcénylène divalente complétant un noyau naphtalénique substitué par un ou plusieurs desdits groupes polaires ou groupes acide sulfonique ou sel d'acide sulfonique, acide sulfinique ou sel d'acide sulfinique,acide phosphonique ou sel d'acide phosphonique, ou acide phosphinique ou sel d'acide phosphinique, et
M représente $H^+$ ou un autre cation métallique ou non métallique, ou encore un fragment qui peut être transformé thermiquement en un proton dans les conditions de traitement.

**13.** Procédé selon la revendication 12, dans lequel $R_5$ est un groupe polaire et se liant à l'hydrogène, choisi parmi les groupes hydroxy, acide carboxylique ou sel d'acide carboxylique et carbonyle, ou bien deux ou plus de deux groupes $R_5$ peuvent former ensemble une chaîne alcénylène divalente complétant un noyau naphtalénique qui est substitué par un ou plusieurs des groupes polaires mentionnés précédemment ou groupes acide sulfonique ou sel d'acide sulfonique.

**14.** Procédé selon la revendication 11, dans lequel ledit dopant est choisi parmi l'acide 4-hydroxybenzènesulfonique, l'acide 1-naphtol-3,6-disulfonique, l'acide 2,5-dihydroxybenzène-1,4-disulfonique, l'acide 3,6-dihydroxynaphtalène-2,7-disulfonique, l'acide 6-amino-4-hydroxynaphtalènesulfonique, l'acide 3-hydroxybenzènesulfonique, l'acide 3-(oxyde de diphényle)-disulfonique, l'acide perfluorobutanesulfonique, l'acide sulfosalicylique, l'acide 1,5-naphtalènedisulfonique, l'acide 2,6-naphtalènedisulfonique, l'acide (oxyde de diphényle)-4,4'-disulfonique, l'acide (diphénylsulfone-4,4'-disulfonique, l'acide 1,3,6-naphtalènetrisulfonique et l'acide 2,5-dihydroxy-1,4-benzènedisulfonique.